(19) Europäisches Patentamt
European Patent Office
Office européen des brevets

(11) **EP 3 640 596 A1**

(12) **EUROPEAN PATENT APPLICATION**
published in accordance with Art. 153(4) EPC

(43) Date of publication:
**22.04.2020 Bulletin 2020/17**

(51) Int Cl.:
***G01C 21/30*** (2006.01)

(21) Application number: **18834716.5**

(22) Date of filing: **06.07.2018**

(86) International application number:
**PCT/CN2018/094740**

(87) International publication number:
**WO 2019/015485 (24.01.2019 Gazette 2019/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.07.2017 CN 201710586941**

(71) Applicant: **Huawei Technologies Co., Ltd.**
**Longgang District**
**Shenzhen, Guangdong 518129 (CN)**

(72) Inventors:
• **YANG, Li**
**Shenzhen, Guangdong 518129 (CN)**
• **SUN, Weiwei**
**Shanghai 200443 (CN)**
• **WU, Hao**
**Shanghai 200443 (CN)**

(74) Representative: **Epping - Hermann - Fischer**
**Patentanwaltsgesellschaft mbH**
**Schloßschmidstraße 5**
**80639 München (DE)**

(54) **METHOD AND APPARATUS FOR DETERMINING MOVEMENT TRAJECTORY**

(57) This application provides a method and an apparatus for determining a moving track. The method includes: obtaining locations of n original track points $P_1$ to $P_n$ during a moving process of a mobile terminal, where a time point at which the mobile terminal passes the $i^{th}$ original track point $P_i$ is earlier than a time point at which the mobile terminal passes the $(i+1)^{th}$ original track point $P_{i+1}$; performing filtering on the n original track points $P_1$ to $P_n$, where the filtering is used to delete and/or update a location of at least one of the original track points $P_1$ to $P_n$; and determining a moving track of the mobile terminal on at least one road in a road map based on target track points obtained by performing filtering on the n original track points $P_1$ to $P_n$. The method and apparatus for determining the moving track according to the embodiments of this application, for a high-noise data obtaining manner such as base station positioning, the map matching procedure is more accurate and the obtained moving track is closer to an actual situation.

100

Obtain locations of n original track points $P_1$ to $P_n$ during a moving process of a mobile terminal, where a time point at which the mobile terminal passes the $i^{th}$ original track point $P_i$ in the n original track points $P_1$ to $P_n$ is earlier than a time point at which the mobile terminal passes the $(i+1)^{th}$ original track point $P_{i+1}$, and n is a positive integer — S110

Perform filtering on the n original track points $P_1$ to $P_n$, where the filtering may be used to delete at least one of the n original track points $P_1$ to $P_n$, and/or update a location of at least one of the n original track points $P_1$ to $P_n$ — S120

Determine a moving track on at least one road in a road map of the mobile terminal based on target track points obtained by performing the filtering on the n original track points $P_1$ to $P_n$, where the road map includes a plurality of roads. — S130

FIG. 1

EP 3 640 596 A1

**Description**

This application claims priority to Chinese Patent Application No. 201710586941.1, filed with the China National Intellectual Property Administration on July 18, 2017 and entitled "METHOD AND APPARATUS FOR DETERMINING MOVING TRACK", which is incorporated herein by reference in its entirety.

**TECHNICAL FIELD**

This application relates to fields of information technologies, and more specifically, to a method and an apparatus for determining a moving track.

**BACKGROUND**

Map matching is an error correction technology for moving track data. The technology is based on a pattern recognition theory, and may be based on an assumption that a vehicle always travels on a road. A basic idea of the technology is to compare and match vehicle location information measured by using a positioning method with electronic map data of a navigation system with reference to a vehicle positioning track and a road network in a digital map, to find a road segment on which a vehicle is located. A combination of a positioning technology and a map matching technology can effectively reduce an error caused by positioning sampling and greatly improve accuracy of vehicle positioning, and has been widely applied to fields such as global positioning system (global positioning system, GPS) navigation and traffic flow analysis.

In the existing map matching technologies, map matching based on a hidden Markov model (Hidden Markov Model, HMM) has the best accuracy and robustness. The method is mainly designed for a track with a small error, for example, a GPS track of which the error is at the level of 10 m, and in terms of matching accuracy, an ideal result can be achieved.

At present, it is relatively easy to obtain base station positioning data, user mobile phones are very popular, unlike GPS positioning, there is no need to actively turn on a GPS switch, a volume of obtained data is relatively large, and abundant information is included. Therefore, it is very necessary to provide a map matching technology that is based on the base station positioning data. If an existing HMM map matching algorithm is used, for a track with a large error such as base station track data, the error is at the level of 100 m, and in terms of matching accuracy, an ideal result cannot be achieved.

**SUMMARY**

This application provides a method and an apparatus for determining a moving track, capable of filtering and correcting a track point that may have a negative effect during a map matching procedure.

According to a first aspect, a method for determining a moving track is provided, including: obtaining locations of n original track points $P_1$ to $P_n$ during a moving process of a mobile terminal, where a time point at which the mobile terminal passes the $i^{th}$ original track point $P_i$ in the n original track points $P_1$ to $P_n$ is earlier than a time point at which the mobile terminal passes the $(i+1)^{th}$ original track point $P_{i+1}$, and n is a positive integer; performing filtering on the n original track points $P_1$ to $P_n$, where the filtering is used to delete at least one of the n original track points $P_1$ to $P_n$, and/or update a location of at least one of the n original track points $P_1$ to $P_n$; and determining a moving track of the mobile terminal on at least one road in a road map based on target track points that are obtained by performing the filtering on the n original track points $P_1$ to $P_n$, where the road map includes a plurality of roads.

Therefore, by using the method for determining a moving track in the embodiments of this application, at least one type of filtering is performed on the n original track points during the moving process of the mobile terminal, to obtain m target points; and road map matching is further performed on the m target track points, to obtain the moving track of the mobile terminal, so that a track point that has a relatively large error and that produces a negative effect in the original track points can be filtered out or changed, thereby allowing the processed target track points to be more accurate during the map matching. In particular, for a high-noise data obtaining manner, such as base station positioning, and a special situation such as quick positioning, the subsequent map matching procedure is more accurate and the obtained moving track is closer to an actual situation.

It should be understood that, a server can obtain locations of n original track points $P_1$ to $P_n$ during the moving process of the mobile terminal, where the n original track points $P_1$ to $P_n$ may be all or some of the several track points that are collected by a base station. For example, the server may obtain all track points that are collected by the base station, and the n original track points $P_1$ to $P_n$ are all of the track points; or the server may process all track points, and the n original track points $P_1$ to $P_n$ may be some of the track points that are obtained by the server by processing all the original track points.

It should be understood that, when collecting the track points during the moving process of the mobile terminal, the base station may use a same sampling time, for example, obtain, by using a same time interval, the locations of the track points at each time point, or use different sampling times, that is, collect the locations of the track points when the mobile terminal moves at different time intervals.

Optionally, in an embodiment, the filtering in the method may include at least one of difference filtering, speed filtering, angle filtering, distortion degree filtering, trimmed mean filtering, and near-point filtering, where the speed filtering, the angle filtering, the distortion degree filtering, and the near-point filtering may be used to delete at least one of the n original track points $P_1$ to $P_n$, and the difference filtering and the trimmed mean filtering may be used to update a location of at least one of the n original track points $P_1$ to $P_n$.

With reference to the first aspect, in an implementation of the first aspect, the performing filtering on the n original track points $P_1$ to $P_n$ includes: performing difference filtering on the n original track points $P_1$ to $P_n$, where the difference filtering is used to rearrange points whose locations coincide, that is, update locations of coincident points.

With reference to the first aspect and the foregoing implementation thereof, in another implementation of the first aspect, the performing filtering on the n original track points $P_1$ to $P_n$ includes: obtaining a to-be-filtered points $P_x$ to $P_{x+a-1}$ in the n original track points $P_1$ to $P_n$, where the a to-be-filtered points $P_x$ to $P_{x+a-1}$ are located at a first location, and x and a are positive integers; obtaining b to-be-filtered points $P_{x+a}$ to $P_{x+a+b-1}$ in the n original track points $P_1$ to $P_n$, where the b to-be-filtered points $P_{x+a}$ to $P_{x+a+b-1}$ are located at a second location, and b is a positive integer greater than 1; obtaining c to-be-filtered points $P_{x+a+b}$ to $P_{x+a+b+c-1}$ in the n original track points $P_1$ to $P_n$, where the c to-be-filtered points $P_{x+a+b}$ to $P_{x+a+b+c-1}$ are located at a third location, c is a positive integer, and x+a+b+c-1 is less than or equal to n; evenly arranging to-be-filtered points $P_{x+\lfloor a/2 \rfloor}$ to $P_{x+a+\lfloor b/2 \rfloor}$ on a straight line from the first location to the second location; and evenly arranging to-be-filtered points $P_{x+a+\lfloor b/2 \rfloor}$ to $P_{x+a+b+\lfloor c/2 \rfloor}$ on a straight line from the second location to the third location, where $\lfloor \ \rfloor$ indicates rounding down.

It should be understood that, when a is greater than 1, the a to-be-filtered points $P_x$ to $P_{x+a-1}$ coincide completely at the first location; the b to-be-filtered points $P_{x+a}$ to $P_{x+a+b-1}$ coincide completely at the second location; and when c is greater than 1, the c to-be-filtered points $P_{x+a+b}$ to $P_{x+a+b+c-1}$ coincide completely at the third location.

It should be understood that, the evenly arranging to-be-filtered points $P_{x+\lfloor a/2 \rfloor}$ to $P_{x+a+\lfloor b/2 \rfloor}$ on a straight line from the first location to the second location includes: arranging the to-be-filtered point $P_{x+\lfloor a/2 \rfloor}$ at the first location and the to-be-filtered point $P_{x+a+\lfloor b/2 \rfloor}$ at the second location, equally dividing the straight line between the first location and the second location by distance, and arranging each to-be-filtered point between the to-be-filtered point $P_{x+\lfloor a/2 \rfloor}$ and the to-be-filtered point $P_{x+a+\lfloor b/2 \rfloor}$ sequentially.

It should be understood that, the evenly arranging to-be-filtered points $P_{x+a+\lfloor b/2 \rfloor}$ to $P_{x+a+b+\lfloor c/2 \rfloor}$ on a straight line from the second location to the third location includes: arranging the to-be-filtered point $P_{x+a+\lfloor b/2 \rfloor}$ at the second location and the to-be-filtered point $P_{x+a+b+\lfloor c/2 \rfloor}$ at the third location, equally dividing the straight line between the second location and the third location by distance, and arranging each to-be-filtered point between the to-be-filtered point $P_{x+a+\lfloor b/2 \rfloor}$ and the to-be-filtered point $P_{x+a+b+\lfloor c/2 \rfloor}$ sequentially.

Therefore, by using the difference filtering, the coincident track points may be rearranged, and locations of some of the track points may be updated, so that the track points are more evenly distributed.

With reference to the first aspect and the foregoing implementations thereof, in another implementation of the first aspect, the performing filtering on the n original track points $P_1$ to $P_n$ includes: performing speed filtering on the n original track points $P_1$ to $P_n$, where the speed filtering is used to filter a point with a relatively high speed, for example, filter a point of which a speed is greater than or equal to a preset speed.

With reference to the first aspect and the foregoing implementations thereof, in another implementation of the first aspect, the performing filtering on the n original track points $P_1$ to $P_n$ includes: obtaining, a speed at a first to-be-filtered point $P_a$ in the n original track points $P_1$ to $P_n$, where a is a positive integer less than or equal to n; and deleting the first to-be-filtered point $P_a$ if the speed at the first to-be-filtered point $P_a$ is greater than or equal to a preset speed.

With reference to the first aspect and the foregoing implementations thereof, in another implementation of the first aspect, the obtaining a speed at a first to-be-filtered point $P_a$ in the n original track points $P_1$ to $P_n$ includes: obtaining the first to-be-filtered point $P_a$ and a second to-be-filtered point $P_b$ in the n original track points $P_1$ to $P_n$, where b=a+1 or b=a-1, and a is less than n; and determining that an average speed in a distance from the first to-be-filtered point $P_a$ to the second to-be-filtered point $P_b$ is the speed at the first to-be-filtered point $P_a$.

It should be understood that, the preset speed may be set based on an actual situation, for example, may be set based on an average speed during the whole moving process of the mobile terminal, or may be set based on a speed of the mobile terminal within a specific period of time or distance, and the embodiments of this application are not limited thereto.

Therefore, by using the speed filtering, some track points with excessive erroneous speeds may be filtered out. The speeds of the track points do not conform to common sense, and are greatly different from speeds of other track points, so that the speed filtering can make remaining data more reasonable and ready.

With reference to the first aspect and the foregoing implementations thereof, in another implementation of the first aspect, the performing filtering on the n original track points $P_1$ to $P_n$ includes: performing angle filtering on the n original track points $P_1$ to $P_n$, where the angle filtering is used to delete vertexes of some angles that are greater than or equal to a preset angle.

With reference to the first aspect and the foregoing implementations thereof, in another implementation of the first aspect, the performing filtering on the n original track points $P_1$ to $P_n$ includes: obtaining four to-be-filtered points $P_c$, $P_{c+1}$, $P_{c+2}$, and $P_{c+3}$ in the n original track points $P_1$ to $P_n$, where c is a positive integer, and c+3 is less than or equal to n; determining a first angle $\angle P_c P_{c+1} P_{c+2}$ and a second angle $\angle P_{c+1} P_{c+2} P_{c+3}$; and deleting the to-be-filtered point $P_{c+1}$ or the to-be-filtered point $P_{c+2}$ in the four to-be-filtered points $P_c$, $P_{c+1}$, $P_{c+2}$, and $P_{c+3}$ if the first angle is less than or equal to a first preset angle and the second angle is less than or equal to a second preset angle.

It should be understood that, the preset angle may be set based on an actual situation, where the first preset angle and the second preset angle may be set to be the same or different, and the embodiments of this application are not limited thereto.

Considering that when the mobile terminal moves on a road, a track of the mobile terminal is generally a relatively smooth line segment, and if there is a relatively small acute angle, it is likely to be caused by a sampling error. Therefore, a track point with a large error may be filtered out by using the angle filtering.

With reference to the first aspect and the foregoing implementations thereof, in another implementation of the first aspect, the performing filtering on the n original track points $P_1$ to $P_n$ includes: performing distortion degree filtering on the n original track points $P_1$ to $P_n$, where in the distortion degree filtering, some points with excessively large distortion degrees are deleted.

With reference to the first aspect and the foregoing implementations thereof, in another implementation of the first aspect, the performing filtering on the n original track points $P_1$ to $P_n$ includes: obtaining $2\alpha+1$ to-be-filtered points $P_{f-\alpha}$ to $P_{f+\alpha}$ in the n original track points $P_1$ to $P_n$, where f and $\alpha$ are positive integers, and f is greater than $\alpha$; determining a distance between a to-be-filtered point $P_g$ and an adjacent to-be-filtered point $P_{g+1}$ that are in the $2\alpha+1$ to-be-filtered points $P_{f-\alpha}$ to $P_{f+\alpha}$, where g is set to range from f-$\alpha$ to f+$\alpha$-1, to obtain 2a distances; determining that a distance between the first to-be-filtered point $P_{f-\alpha}$ and the last to-be-filtered point $P_{f+\alpha}$ in the $2\alpha+1$ to-be-filtered points $P_{f-\alpha}$ to $P_{f+\alpha}$ is a first distance; determining that a quotient of a sum of the $2\alpha$ distances and the first distance is a distortion degree; and deleting the $(\alpha+1)^{\text{th}}$ to-be-filtered point $P_f$ in the $2\alpha+1$ to-be-filtered points $P_{f-\alpha}$ to $P_{f+\alpha}$ when the distortion degree is greater than or equal to a preset distortion degree.

Specifically, the server may: traverse each point in the n original track points $P_1$ to $P_n$, where any track point $P_f$ is used as an example herein. A half window size is set to $\alpha$ with the to-be-filtered point $P_f$ as a center, that is, the to-be-filtered point $P_f$ is centered, and $\alpha$ to-be-filtered points before $P_f$ and $\alpha$ to-be-filtered points after $P_f$ in the n original track points $P_1$ to $P_n$ are obtained, to obtain a total of $2\alpha+1$ to-be-filtered points $P_{f-\alpha}$ to $P_{f+\alpha}$. A distance between every two adjacent to-be-filtered points in the $2\alpha+1$ to-be-filtered points $P_{f-\alpha}$ to $P_{f+\alpha}$ is determined, and all the distances are summed up. A distance between the first to-be-filtered point $P_{f-\alpha}$ and the last to-be-filtered point $P_{f+\alpha}$ that are in the $2\alpha+1$ to-be-filtered points $P_{f-\alpha}$ to $P_{f+\alpha}$ is then determined, where the distance is referred to as a first distance, so that a distortion degree of the to-be-filtered point $P_f$ is equal to the quotient of the sum of the $2\alpha$ distances and the first distance.

It should be understood that, based on a preset distortion degree $\zeta$, if $tort(P_f) \gtrless \zeta$, the distortion degree of $P_f$ is considered to be excessively large, that is, a broken line segment formed by several points that are near $P_f$ is relatively distorted and has a relatively low confidence level, and $P_f$ needs to be filtered out; otherwise, $P_f$ may be reserved.

Optionally, the preset distortion degree $\zeta$ may be set based on an actual situation, and generally, the distortion degree $\zeta$ is set to satisfy $\zeta \geq 1$.

When the mobile terminal moves on a road network, a track of the mobile terminal should be a relatively smooth line segment, that is, a corresponding distortion degree is relatively small, in other words, approaches 1. If a serious distortion occurs, it is very likely that the serious distortion is caused by a sampling error. Therefore, filtering needs to be performed, and by using the distortion degree filtering, some points with large errors may be filtered out.

With reference to the first aspect and the foregoing implementations thereof, in another implementation of the first aspect, the performing filtering on the n original track points $P_1$ to $P_n$ includes: performing trimmed mean filtering on the n original track points $P_1$ to $P_n$, where in the trimmed mean filtering, coordinates of some or all the track points may be updated.

With reference to the first aspect and the foregoing implementations thereof, in another implementation of the first aspect, the performing filtering on the n original track points $P_1$ to $P_n$ includes: obtaining $2\beta+1$ to-be-filtered points $P_{l-\beta}$ to $P_{l+\beta}$ in the n original track points $P_1$ to $P_n$, where l and $\beta$ are positive integers, and l is greater than $\beta$; determining, in the $2\beta+1$ to-be-filtered points $P_{l-\beta}$ to $P_{l+\beta}$, an average value of longitudes of all k to-be-filtered points and an average value of latitudes of all h to-be-filtered points, where k and h are positive integers less than $2\beta+1$; and determining that the average value of the longitudes and the average value of the latitudes are respectively a longitude and a latitude that are of the $(\beta+1)^{\text{th}}$ to-be-filtered point $P_l$ in the $2\beta+1$ to-be-filtered points $P_{l-\beta}$ to $P_{l+\beta}$.

With reference to the first aspect and the foregoing implementations thereof, in another implementation of the first aspect, the performing filtering on the n original track points $P_1$ to $P_n$ includes: establishing a rectangular coordinate system, where the rectangular coordinate system includes an X-axis in a horizontal direction and a Y-axis in a vertical direction; determining coordinates of each of the n original track points $P_1$ to $P_n$; obtaining $2\beta+1$ to-be-filtered points $P_{l-\beta}$ to $P_{l+\beta}$ in the n original track points $P_1$ to $P_n$, where $l$ and $\beta$ are positive integers, and $l$ is greater than $\beta$; determining, in the $2\beta+1$ to-be-filtered points $P_{l-\beta}$ to $P_{l+\beta}$, an average value of X-axis coordinates of k to-be-filtered points and an average value of Y-axis coordinates of h to-be-filtered points, where k and h are positive integers less than $2\beta+1$; and determining that the average value of the X-axis coordinates and the average value of the Y-axis coordinates are respectively an X-axis coordinate and a Y-axis coordinate that are of the $(\beta+1)^{th}$ to-be-filtered point $P_l$ in the $2\beta+1$ to-be-filtered points $P_{l-\beta}$ to $P_{l+\beta}$.

It should be understood that, in the $2\beta+1$ to-be-filtered points $P_{l-\beta}$ to $P_{l+\beta}$, k to-be-filtered points and h to-be-filtered points are determined, where the k to-be-filtered points and the h to-be-filtered points may be consecutive or inconsecutive, a value of k may be equal to or may not be equal to a value of h, and the k to-be-filtered points and the h to-be-filtered points may be the same points or may be different points.

Optionally, for determining k to-be-filtered points in the $2\beta+1$ to-be-filtered points $P_{l-\beta}$ to $P_{l+\beta}$, all of the $2\beta+1$ to-be-filtered points may be arranged based on magnitudes of first coordinate values, where the first coordinate may refer to the foregoing longitude value or X-axis coordinate, to-be-filtered points that correspond to maximum and minimum values are removed, and only k to-be-filtered points that correspond to intermediate values are taken; and similarly, all the to-be-filtered points are further arranged based on magnitudes of second coordinate values, where the second coordinate may refer to the foregoing latitude value or X-axis coordinate, to-be-filtered points that correspond to maximum and minimum values are removed, and only h to-be-filtered points that correspond to intermediate values are taken.

It should be understood that, the trimmed mean filtering may be performed on each of the n original track points $P_1$ to $P_n$, or may be performed on some track points. For example, the trimmed mean filtering is only performed on some points of which coordinate value changes are relatively large. Optionally, a difference threshold may be set. When a variation of a coordinate value is less than the difference threshold, it is determined that the coordinate value change is relatively small, and the trimmed mean filtering is not performed, but the embodiments of this application are not limited thereto.

Therefore, in the trimmed mean filtering, coordinates of a current point may be adjusted with reference to locations of several points before and after the point, so that the shape of the track is smoother, and subsequent map matching is helped.

With reference to the first aspect and the foregoing implementations thereof, in another implementation of the first aspect, the performing filtering on the n original track points $P_1$ to $P_n$ includes: performing near-point filtering on the n original track points $P_1$ to $P_n$, where the near-point filtering is used to delete the track points that are relatively close to each other.

With reference to the first aspect and the foregoing implementations thereof, in another implementation of the first aspect, the performing filtering on the n original track points $P_1$ to $P_n$ includes: obtaining the $y^{th}$ to-be-filtered point $P_y$ and the $(y+1)^{th}$ to-be-filtered point $P_{y+1}$ in the n original track points $P_1$ to $P_n$; and deleting the $y^{th}$ to-be-filtered point $P_y$ and/or the $(y+1)^{th}$ to-be-filtered point $P_{y+1}$ if a distance between the $y^{th}$ to-be-filtered point $P_y$ and the $(y+1)^{th}$ to-be-filtered point $P_{y+1}$ is less than or equal to a preset distance.

With reference to the first aspect and the foregoing implementations thereof, in another implementation of the first aspect, the performing filtering on the n original track points $P_1$ to $P_n$ includes: obtaining the $(y-1)^{th}$ to-be-filtered point $P_{y-1}$, the $y^{th}$ to-be-filtered point $P_y$, and the $(y+1)^{th}$ to-be-filtered point $P_{y+1}$ in the n original track points $P_1$ to $P_n$; and deleting the $y^{th}$ to-be-filtered point $P_y$; otherwise, reserving the to-be-filtered points $P_y$ if a distance between the $(y-1)^{th}$ to-be-filtered point $P_{y-1}$ and the $y^{th}$ to-be-filtered point $P_y$ is less than or equal to a preset distance, and a distance between the $y^{th}$ to-be-filtered point $P_y$ and the $(y+1)^{th}$ to-be-filtered point $P_{y+1}$ is also less than or equal to the preset distance.

Therefore, the near-point filtering can eliminate a positioning error caused by an excessively slow moving speed or a static status of the mobile terminal and an impact on map matching, to resolve an anchor point drift problem caused by a stay of the mobile terminal. For example, the mobile terminal may be a vehicle, the vehicle may stop or slow down during traveling, and the near-point filtering can eliminate a positioning error caused by a stopping or slowing-down process of the vehicle.

It should be understood that, the foregoing filtering may include at least one of the difference filtering, the speed filtering, the angle filtering, the distortion degree filtering, the trimmed mean filtering, and the near-point filtering. Therefore, when the filtering process includes at least two filtering procedures, n original track points $P_1$ to $P_n$ in any non-first filtering may be obtained by renumbering remaining track points after previous filtering.

It should be understood that, with consideration of calculation complexity and accuracy, at least one filtering manner of the difference filtering, the speed filtering, the angle filtering, the distortion degree filtering, the trimmed mean filtering, and the near-point filtering may be randomly chosen. For example, because procedures of the angle filtering and the distortion degree filtering are similar, choosing to perform only one of them is acceptable. For another example, because the difference filtering is relatively complex and a probability that original track points completely overlap is relatively small, choosing not to perform the difference filtering is acceptable. For another example, with consideration of a calculation effect, if it is determined to perform the difference filtering, the difference filtering may be set to be first filtering, and then, other filtering is performed.

With reference to the first aspect and the foregoing implementations thereof, in another implementation of the first aspect, the road map is obtained, and each of the plurality of roads in the road map only includes two ends and does not include any branch road.

With reference to the first aspect and the foregoing implementations thereof, in another implementation of the first aspect, the performing filtering on the n original track points $P_1$ to $P_n$ includes: performing the filtering on the n original track points $P_1$ to $P_n$ to obtain m target track points, where m is a positive integer less than or equal to n.

With reference to the first aspect and the foregoing implementations thereof, in another implementation of the first aspect, the determining a moving track of the mobile terminal on at least one road in a road map based on target track points obtained by performing the filtering on the n original track points $P_1$ to $P_n$ includes: matching the m target track points with m points that are on the road in the road map, where the m points are arranged chronologically; and determining, based on the road occupied by the m points, the moving track of the mobile terminal on the at least one road.

With reference to the first aspect and the foregoing implementations thereof, in another implementation of the first aspect, the determining a moving track of the mobile terminal on at least one road in a road map based on target track points obtained by performing the filtering on the n original track points $P_1$ to $P_n$ includes: obtaining a first point and a second point that are temporally consecutive in the m points, where a time point of the first point is earlier than a time point of the second point; if the first point and the second point are located on a same road, determining that the track of the mobile terminal moves from the first point to the second point along the same road; if the first point is located on a first road, the second point is located on a second road, and the first road is different from and is connected to the second road, determining that the track of the mobile terminal moves along the first point on the first road to the second point on the second road; and if the first point is located on the first road, the second point is located on the second road, and the first road is different from and is not connected to the second road, determining a shortest path between an end point of the first road and a starting point of the second road along roads in the road map, and determining that the track of the mobile terminal moves along the first point on the first road to the end point of the first road, reaches the starting point of the second road through the shortest path, and moves to the second point on the second road by passing the starting point of the second road.

Therefore, by using the method for determining a moving track in the embodiments of this application, at least one type of filtering is performed on the n original track points during the moving process of the mobile terminal, to obtain m target points; and road map matching is further performed on the m target track points, to obtain the moving track of the mobile terminal, so that a track point that has a relatively large error and that produces a negative effect in the original track points can be filtered out or changed, thereby allowing the processed target track points to be more accurate during the map matching. In particular, for a high-noise data obtaining manner, such as base station positioning, and a special situation such as quick positioning, the subsequent map matching procedure is more accurate and the obtained moving track is closer to an actual situation.

According to a second aspect, an apparatus for determining a moving track is provided, configured to perform the method in the foregoing first aspect or any possible implementation of the first aspect. Specifically, the apparatus includes a unit configured to perform the method in the foregoing first aspect or any possible implementation of the first aspect.

According to a third aspect, an apparatus for determining a moving track is provided, including a storage unit and a processor, where the storage unit is configured to store an instruction, the processor is configured to execute the instruction stored in the memory, and when the processor executes the instruction stored in the memory, the execution enables the processor to perform the method in the first aspect or any possible implementation of the first aspect.

According to a fourth aspect, a computer-readable medium is provided, configured to store a computer program, where the computer program includes an instruction that is used to perform the method in the first aspect or any possible implementation of the first aspect.

According to a fifth aspect, a computer program product including an instruction is provided. When the instruction of the computer program product is run on a computer, the computer performs the method for determining a moving track in the foregoing first aspect or any possible implementation of the first aspect. Specifically, the computer program product can be run on the apparatus for determining a moving track in the foregoing third aspect.

**BRIEF DESCRIPTION OF DRAWINGS**

FIG. 1 is a schematic flowchart of a method for determining a moving track according to an embodiment of this application;

FIG. 2 is a schematic diagram of difference filtering according to an embodiment of this application;

FIG. 3 is a schematic diagram of speed filtering according to an embodiment of this application;

FIG. 4 is a schematic diagram of angle filtering according to an embodiment of this application;

FIG. 5 is a schematic diagram of distortion degree filtering according to an embodiment of this application;

FIG. 6 is a schematic diagram of trimmed mean filtering according to an embodiment of this application;

FIG. 7 is a schematic diagram of near-point filtering according to an embodiment of this application;

FIG. 8 is a schematic diagram of a road map matching method according to an embodiment of this application;

FIG. 9 is another schematic diagram of a road map matching method according to an embodiment of this application;

FIG. 10 is a schematic block diagram of an apparatus for determining a moving track according to an embodiment of this application; and

FIG. 11 is another schematic block diagram of an apparatus for determining a moving track according to an embodiment of this application.

## DESCRIPTION OF EMBODIMENTS

The following describes technical solutions of this application with reference to accompanying drawings.

It should be understood that, the technical solutions of the embodiments of this application may be applied to various communications systems, such as: a Global System for Mobile Communications (Global System of Mobile communication, GSM) system, a Code Division Multiple Access (Code Division Multiple Access, CDMA) system, a Wideband Code Division Multiple Access (Wideband Code Division Multiple Access, WCDMA) system, a general packet radio service (General Packet Radio Service, GPRS), a Long Term Evolution (Long Term Evolution, LTE) system, an LTE frequency division duplex (Frequency Division Duplex, FDD) system, an LTE time division duplex (Time Division Duplex, TDD), Universal Mobile Telecommunications System (Universal Mobile Telecommunications System, UMTS), or a Worldwide Interoperability for Microwave Access (Worldwide Interoperability for Microwave Access, WiMAX) communications system.

In the embodiments of this application, a mobile terminal may include, but is not limited to, a mobile station (Mobile Station, MS), a mobile terminal (Mobile Terminal), a mobile telephone (Mobile Telephone), user equipment (User Equipment, UE), a handset (handset) and portable equipment (portable equipment), a vehicle (vehicle), and the like. The mobile terminal may communicate with one or more core networks by using a radio access network (Radio Access Network, RAN). For example, the mobile terminal may be a vehicle, or may be a portable, pocket-sized, handheld, computer built-in, or in-vehicle mobile apparatus or the like.

The embodiments of this application also relate to a base station, and the base station can collect a moving track of a mobile terminal in a moving process. Optionally, an existing base station may be reused by the base station, that is, the base station may be an apparatus deployed in a radio access network to provide a wireless communication function for the terminal device. The base station may include a macro base station, a micro base station, a relay station, an access point, and the like in various forms. In systems using different radio access technologies, names of devices that have base station functions may be different. For example, in the LTE network, the device may be referred to as an evolved NodeB (Evolved NodeB, eNB, or eNodeB), and in a 3rd Generation (3rd Generation, 3G) network, the device may be referred to as a NodeB (Node B).

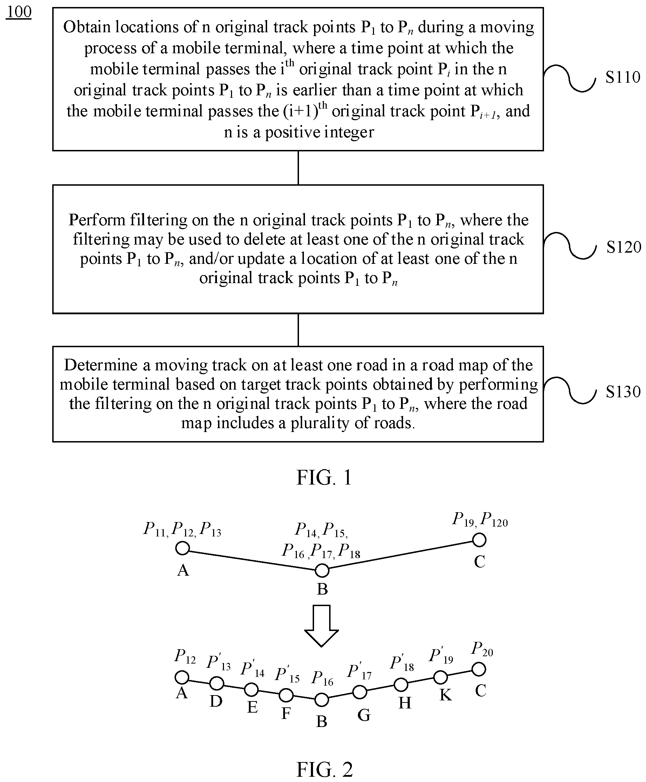

FIG. 1 is a schematic flowchart of a method 100 for determining a moving track according to an embodiment of this application. The method 100 may be performed by a server, for example, a positioning server. The positioning server can obtain data of a moving track of a terminal device collected by a base station, and perform related processing on the data. Optionally, the positioning server may alternatively be the base station, and this embodiment of this application is not limited thereto. For ease of description, description is provided below by using the method 100 performed by a server as an example.

As shown in FIG. 1, the method 100 includes S110: Obtain locations of n original track points $P_1$ to $P_n$ during a moving process of a mobile terminal, where a time point at which the mobile terminal passes the $i^{th}$ original track point $P_i$ in the n original track points $P_1$ to $P_n$ is earlier than a time point at which the mobile terminal passes the $(i+1)^{th}$ original track point $P_{i+1}$, and n is a positive integer.

In this embodiment of this application, during the moving process of the mobile terminal, the base station may collect a moving track of the mobile terminal, to obtain locations of several track points. In S110, the server may obtain locations of n original track points $P_1$ to $P_n$ during the moving process of the mobile terminal, where the n original track points $P_1$ to $P_n$ may be all or some of the several track points that are collected by the base station. For example, the server may obtain all track points that are collected by the base station, and the n original track points $P_1$ to $P_n$ are all of the track points; or the server may process all track points, and the n original track points $P_1$ to $P_n$ may be some of the track points that are obtained by the server by processing all the original track points, and this embodiment of this application is not limited thereto.

It should be understood that, during the moving process of the mobile terminal, the mobile terminal may be located in different locations over time. The base station collects the track points during the moving process of the mobile terminal, and correspondingly, each track point includes a time point at which the mobile terminal passes the track point. The n original track points $P_1$ to $P_n$ of the mobile terminal that are obtained by the server may be arranged based on time points at which the mobile terminal passes the original track points, for example, a time point at which the mobile terminal passes the $i^{th}$ original track point $P_i$ in the n original track points $P_1$ to $P_n$ is earlier than a time point at which the mobile terminal passes the $(i+1)^{th}$ original track point $P_{i+1}$.

It should be understood that, when collecting the track points during the moving process of the mobile terminal, the base station may use a same sampling time, for example, obtain, by using a same time interval, the locations of the track points at each time point, or use different sampling times, that is, collect the locations of the track points when the mobile terminal moves at different time intervals.

As shown in FIG. 1, the method 100 further includes S120: Perform filtering on the n original track points $P_1$ to $P_n$, where the filtering may be used to delete at least one of the n original track points $P_1$ to $P_n$, and/or update a location of at least one of the n original track points $P_1$ to $P_n$.

Optionally, in an embodiment, the filtering may include at least one of difference filtering, speed filtering, angle filtering, distortion degree filtering, trimmed mean filtering, and near-point filtering, where the speed filtering, the angle filtering, the distortion degree filtering, and the near-point filtering may be used to delete at least one of the n original track points $P_1$ to $P_n$, and the difference filtering and the trimmed mean filtering may be used to update a location of at least one of the n original track points $P_1$ to $P_n$.

Optionally, in an embodiment, filtering is performed on the n original track points $P_1$ to $P_n$, and the filtering may be difference filtering. Specifically, the server obtains a to-be-filtered points $P_x$ to $P_{x+a-1}$ in the n original track points $P_1$ to $P_n$, where the a to-be-filtered points $P_x$ to $P_{x+a-1}$ are located at a first location, and x and a are positive integers, that is, when a is greater than 1, the a to-be-filtered points $P_x$ to $P_{x+a-1}$ coincide completely at the first location; then obtains b to-be-filtered points $P_{x+a}$ to $P_{x+a+b-1}$ in the n original track points $P_1$ to $P_n$, where the b to-be-filtered points $P_{x+a}$ to $P_{x+a+b-1}$ are located at a second location, and b is a positive integer greater than 1, that is, the b to-be-filtered points $P_{x+a}$ to $P_{x+a+b-1}$ coincide completely at the second location; and then obtains c to-be-filtered points $P_{x+a+b}$ to $P_{x+a+b+c-1}$ in the n original track points $P_1$ to $P_n$, where the c to-be-filtered points $P_{x+a+b}$ to $P_{x+a+b+c-1}$ are located at a third location, c is a positive integer, and x+a+b+c-1 is less than or equal to n, that is, when c is greater than 1, the c to-be-filtered points $P_{x+a+b}$ to $P_{x+a+b+c-1}$ coincide completely at the third location. The first location is connected to the second location to obtain a straight line, and to-be-filtered points $P_{x+\lfloor a/2 \rfloor}$ to $P_{x+a+\lfloor b/2 \rfloor}$ are evenly arranged on the straight line from the first location to the second location, where a to-be-filtered point $P_{x+\lfloor a/2 \rfloor}$ is at the first location, a to-be-filtered point $P_{x+a+\lfloor b/2 \rfloor}$ is at the second location, the straight line between the first location and the second location is equally divided by distance, and each to-be-filtered point between the to-be-filtered point $P_{x+\lfloor a/2 \rfloor}$ and the to-be-filtered point $P_{x+a+\lfloor b/2 \rfloor}$ is arranged sequentially. Similarly, the second location is connected to the third location to obtain a straight line, and to-be-filtered points $P_{x+a+\lfloor b/2 \rfloor}$ to $P_{x+a+b+\lfloor c/2 \rfloor}$ are evenly arranged on the straight line from the second location to the third location, where a to-be-filtered point $P_{x+a+\lfloor b/2 \rfloor}$ is at the second location, a to-be-filtered point $P_{x+a+b+\lfloor c/2 \rfloor}$ is at the third location, the straight line between the second location and the third location is equally divided by distance, each to-be-filtered point between the to-be-filtered point $P_{x+a+\lfloor b/2 \rfloor}$ and the to-be-filtered point $P_{x+a+b+\lfloor c/2 \rfloor}$ is arranged sequentially, and $\lfloor \ \rfloor$ indicates rounding down.

For example, FIG. 2 is a schematic diagram of difference filtering according to an embodiment of this application. As shown in FIG. 2, a to-be-filtered points $P_x$ to $P_{x+a-1}$ that are located at the first location are obtained in the n original track points, where it is set that a=3, x=11, and the first location is a point A, that is, a to-be-filtered points are $P_{11}$, $P_{12}$, and $P_{13}$ located at the point A; b to-be-filtered points $P_{x+a}$ to $P_{x+a+b-1}$ located at the second location are obtained in the n original track points, where it is set that b=5, and the second location is a point B, that is, the b to-be-filtered points are $P_{14}$, $P_{15}$, $P_{16}$, $P_{17}$, and $P_{18}$ located at the point B; and c to-be-filtered points $P_{x+a+b}$ to $P_{x+a+b+c-1}$ located at the third location are selected from the n original track points, where it is set that c=2, and the third location is a point C, that is, the c to-be-filtered points are $P_{19}$ and $P_{20}$ located at the point C. The point A is connected to the point B to obtain a line segment AB. Based on a=3 and b=5, it can be learned that a total of five to-be-filtered points $P_{12}$ to $P_{16}$ are evenly arranged on the line segment AB. The line segment AB is divided into four segments with an equal length, to obtain five points A, D, E, F, and B as shown in FIG. 2, and the five points satisfy that AD=DE=EF=FB. An arrangement result is that: $P_{12}$ is at the point A, $P_{13}'$ is at the point D, $P_{14}'$ is at the point E, $P_{15}'$ is at the point F, and $P_{16}$ is at the point B, where $P_{13}'$ is a location of $P_{13}$ after movement, $P_{14}'$ is a location of $P_{14}$ after movement, and $P_{15}'$ is a location of $P_{15}$ after movement. Similarly, the point B is connected to the point C to obtain a line segment BC. Based on b=5 and c=2, it can be learned that a total of five to-be-filtered points $P_{16}$ to $P_{20}$ are evenly arranged on the line segment BC. The line segment BC is divided into four segments with an equal length, to obtain 5 points B, G, H, K, and C as shown in FIG.

2, and the five points satisfy that BG=GH=HK=KC. An arrangement result is that: $P_{16}$ is at the point B, $P_{17}^{'}$ is at the point G, $P_{18}^{'}$ is at the point H, $P_{19}^{'}$ is at the point K, and $P_{20}$ is at the point C, where $P_{17}^{'}$ is a location of $P_{17}$ after movement, $P_{18}^{'}$ is a location of $P_{18}$ after movement, and $P_{19}^{'}$ is a location of $P_{19}$ after movement.

Therefore, by using the difference filtering, coincident points may be rearranged, and locations of some of track points may be updated, so that the track points are more evenly distributed.

Optionally, in an embodiment, filtering is performed on the n original track points $P_1$ to $P_n$, and the filtering may be speed filtering. Specifically, the server obtains a speed at a first to-be-filtered point $P_a$ in the n original track points $P_1$ to $P_n$, where each track point of the n original track points $P_1$ to $P_n$ may serve as the first to-be-filtered point $P_a$ sequentially; and if the speed at the first to-be-filtered point $P_a$ is greater than or equal to a preset speed, deletes the first to-be-filtered point $P_a$. Determining the speed at the first to-be-filtered point $P_a$ includes that: the server may obtain the first to-be-filtered point $P_a$ and a second to-be-filtered point $P_b$ in the n original track points $P_1$ to $P_n$, where b=a+1 or b=a-1; and determine that an average speed in a distance from the first to-be-filtered point $P_a$ to the second to-be-filtered point $P_b$ is the speed at the first to-be-filtered point $P_a$. However, this embodiment of this application is not limited thereto.

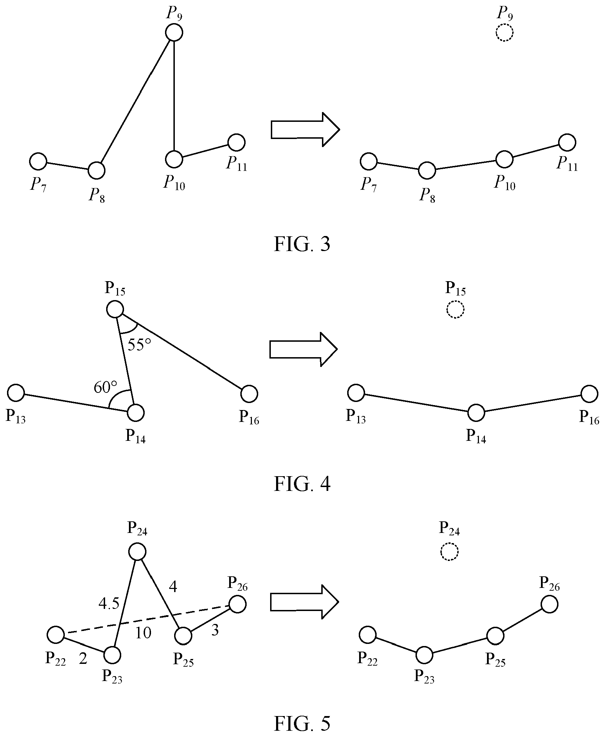

For example, FIG. 3 is a schematic diagram of speed filtering according to an embodiment of this application. As shown in FIG. 3, each track point of the n original track points $P_1$ to $P_n$ may serve as the first to-be-filtered point $P_a$ sequentially, and description is provided herein by using the first to-be-filtered point $P_9$ as an example. Determining a speed at $P_9$ may be determining that an average speed in a distance from $P_8$ to $P_9$ is the speed at $P_9$, or determining that an average speed in a distance from $P_9$ to $P_{10}$ is the speed at $P_9$. If the speed at $P_9$ is greater than or equal to the preset speed, as shown in FIG. 3, $P_9$ may be deleted; and if the speed at $P_9$ is less than the preset speed, $P_9$ is reserved.

It should be understood that, the preset speed may be set based on an actual situation, for example, may be set based on an average speed during the whole moving process of the mobile terminal, or may be set based on a speed of the mobile terminal within a specific period of time or distance, and this embodiment of this application is not limited thereto.

Therefore, by using the speed filtering, some track points with excessive erroneous speeds may be filtered out. The speeds of the track points do not conform to common sense, and are greatly different from speeds of other track points, so that the speed filtering can make remaining data more reasonable and ready.

Optionally, in an embodiment, filtering is performed on the n original track points $P_1$ to $P_n$, and the filtering may be angle filtering. Specifically, the angle filtering may be used to filter out a vertex of an angle that is greater than or equal to a preset angle. For example, the server may obtain four to-be-filtered points $P_c$, $P_{c+1}$, $P_{c+2}$, and $P_{c+3}$ in the n original track points $P_1$ to $P_n$, where c is a positive integer, and c+3 is less than or equal to n; determine a first angle $\angle P_c P_{c+1} P_{c+2}$ and a second angle $\angle P_{c+1} P_{c+2} P_{c+3}$; and delete the to-be-filtered point $P_{c+1}$ or the to-be-filtered point $P_{c+2}$ in the four to-be-filtered points $P_c$, $P_{c+1}$, $P_{c+2}$, and $P_{c+3}$ if the first angle is less than or equal to a first preset angle and the second angle is less than or equal to a second preset angle, where the preset angle includes the first preset angle and the second preset angle.

For example, FIG. 4 is a schematic diagram of angle filtering according to an embodiment of this application. As shown in FIG. 4, four to-be-filtered points are obtained in the n original track points $P_1$ to $P_n$, for example, $P_{13}$, $P_{14}$, $P_{15}$, and $P_{16}$. According to FIG. 4, it can be learned that degrees of $\angle P_{13} P_{14} P_{15}$ and $\angle P_{14} P_{15} P_{16}$ are respectively measured as $\angle P_{13} P_{14} P_{15}$=60° and $\angle P_{14} P_{15} P_{16}$=55°. Assuming that both the first preset angle and the second preset angle are set to 80°, both $\angle P_{13} P_{14} P_{15}$ and $\angle P_{14} P_{15} P_{16}$ are less than the preset angle, so that $P_{14}$ or $P_{15}$ may be deleted, for example, $P_{15}$ may be deleted in FIG. 4.

It should be understood that, the preset angle may be set based on an actual situation, where the first preset angle and the second preset angle may be set to be the same or different, and this embodiment of this application is not limited thereto.

Considering that when the mobile terminal moves on a road, a track of the mobile terminal is generally a relatively smooth line segment, and if there is a relatively small acute angle, it is likely to be caused by a sampling error. Therefore, a track point with a relatively large error may be filtered out by using the angle filtering.

Optionally, in an embodiment, filtering is performed on the n original track points $P_1$ to $P_n$, and the filtering may be distortion degree filtering. Specifically, the server obtains $2\alpha+1$ to-be-filtered points $P_{f-\alpha}$ to $P_{f+\alpha}$ in the n original track points $P_1$ to $P_n$, where f and $\alpha$ are positive integers, and f is greater than $\alpha$. The server determines a distance between any to-be-filtered point $P_g$ and an adjacent to-be-filtered point $P_{g+1}$ that are in the $2\alpha+1$ to-be-filtered points $P_{f-\alpha}$ to $P_{f+\alpha}$, where each of f-$\alpha$ to f+$\alpha$-1 serves as g separately, and a total of 2a distances can be obtained; determines that a distance between the first to-be-filtered point $P_{f-\alpha}$ and the last to-be-filtered point $P_{f+\alpha}$ in the $2\alpha+1$ to-be-filtered points $P_{f-\alpha}$ to $P_{f+\alpha}$ is a first distance; determines that a quotient of a sum of the $2\alpha$ distances and the first distance is a distortion degree; and deletes the $(\alpha+1)^{\text{th}}$ to-be-filtered point $P_f$ in the $2\alpha+1$ to-be-filtered points $P_{f-\alpha}$ to $P_{f+\alpha}$ when the distortion degree is greater than or equal to a preset distortion degree.

Specifically, the server may: traverse each point in the n original track points $P_1$ to $P_n$, where any track point $P_f$ is used as an example herein. A half window size is set to $\alpha$ with the to-be-filtered point $P_f$ as a center, that is, the to-be-filtered point $P_f$ is centered, $\alpha$ to-be-filtered points before $P_f$ and $\alpha$ to-be-filtered points after $P_f$ in the n original track points $P_1$ to $P_n$ are obtained, to obtain a total of $2\alpha+1$ to-be-filtered points $P_{f-\alpha}$ to $P_{f+\alpha}$. A distance between every two adjacent to-be-filtered points in the $2\alpha+1$ to-be-filtered points $P_{f-\alpha}$ to $P_{f+\alpha}$ is determined, and all the distances are summed up. A distance between the first to-be-filtered point $P_{f-\alpha}$ and the last to-be-filtered point $P_{f+\alpha}$ that are in the $2\alpha+1$ to-be-filtered points $P_{f-\alpha}$ to $P_{f+\alpha}$ is then determined, where the distance is referred to as a first distance, so that a distortion degree of the to-be-filtered point $P_f$ is equal to the quotient of the sum of the $2\alpha$ distances and the first distance. That is, the distortion degree $tort(P_f)$ of the to-be-filtered point $P_f$ may be calculated by using the following formula:

$$tort\left(P_f\right) = \frac{\sum_{j=f-a}^{f+a-1} dist\left(P_j, P_{j+1}\right)}{dist\left(P_{f-\alpha}, P_{f+\alpha}\right)}$$

where dist(A,B) represents calculating a distance between the point A and the point B.

It should be understood that, based on the preset distortion degree $\zeta$, if $tort(P_f) \geqq \zeta$, the distortion degree of $P_f$ is considered to be excessively large, that is, a broken line segment formed by several points that are near $P_f$ is relatively distorted and has a relatively low confidence level, and $P_f$ needs to be filtered out; otherwise, $P_f$ may be reserved.

Optionally, the preset distortion degree $\zeta$ may be set based on an actual situation, and the distortion degree $\zeta$ is generally set to satisfy $\zeta \geq 1$. However, this embodiment of this application is not limited thereto.

For example, FIG. 5 is a schematic diagram of distortion degree filtering according to an embodiment of this application. As shown in FIG. 5, the server traverses each point in the n original track points $P_1$ to $P_n$, where a to-be-filtered point $P_{24}$ is used as an example herein. A distortion degree of $P_{24}$ is calculated, where the half window size is set to $\alpha=2$, that is, a total of five to-be-filtered points, namely, $P_{22}$ to $P_{26}$, are obtained. It can be learned from FIG. 5 that, a distance between every two adjacent to-be-filtered points in the to-be-filtered points $P_{22}$ to $P_{26}$ is that: $P_{22}P_{23}=2$, $P_{23}P_{24}=4.5$, $P_{24}P_{25}=4$, and $P_{25}P_{26}=3$; and a distance between the first to-be-filtered point $P_{22}$ and the last to-be-filtered point $P_{26}$ that are in the five to-be-filtered points is that: $P_{22}P_{26}=10$. Therefore, based on the foregoing formula, it can be learned that the distortion degree of the to-be-filtered point $P_{24}$ is:

$$tort\left(P_{24}\right) = \frac{P_{22}P_{23} + P_{23}P_{24} + P_{24}P_{25} + P_{25}P_{26}}{P_{22}P_{26}} = \frac{2+4.5+4+3}{10} = 1.35$$

.

Assuming that the preset distortion degree $\zeta$ is set to 1.2, then 1.35>1.2. Therefore, as shown in FIG. 5, the to-be-filtered point $P_{24}$ needs to be deleted.

When the mobile terminal moves on a road network, a track of the mobile terminal should be a relatively smooth line segment, that is, a corresponding distortion degree is relatively small, in other words, approaches 1. If a serious distortion occurs, it is very likely that the serious distortion is caused by a sampling error. Therefore, filtering needs to be performed, and by using the distortion degree filtering, some points with large errors may be filtered out.

Optionally, in an embodiment, a filtering process is performed on the n original track points $P_1$ to $P_n$, and the filtering may be trimmed mean filtering. Specifically, the server obtains $2\beta+1$ to-be-filtered points $P_{l-\beta}$ to $P_{l+\beta}$ in the n original track points $P_1$ to $P_n$, where $l$ and $\beta$ are positive integers, and $l$ is greater than $\beta$. In the $2\beta+1$ to-be-filtered points $P_{l-\beta}$ to $P_{l+\beta}$, a location of each to-be-filtered point may be represented by at least two coordinate values. The location of each to-be-filtered point represented by two coordinate values is used as an example herein, and the two coordinates are a first coordinate and a second coordinate respectively. An average value of first coordinates of all k to-be-filtered points and an average value of second coordinates of all h to-be-filtered points are determined, where k and h are positive integers less than $2\beta+1$. Similarly, if there are more than two coordinate values, an average values of another coordinate value may also be calculated continuously. The average value of first coordinates and the average value of second coordinates are respectively determined as a first coordinate value and a second coordinate value that are of the $l^{th}$ to-be-filtered point $P_l$ in the $2\beta+1$ to-be-filtered points $P_{l-\beta}$ to $P_{l+\beta}$.

It should be understood that, in the $2\beta+1$ to-be-filtered points $P_{l-\beta}$ to $P_{l+\beta}$, the k to-be-filtered points and the h to-be-filtered points are determined, where the k to-be-filtered points and the h to-be-filtered points may be consecutive or inconsecutive, a value of k may be equal to or may not be equal to a value of h, and the k to-be-filtered points and the h to-be-filtered points may be the same points or different points.

Optionally, for determining k to-be-filtered points in the $2\beta+1$ to-be-filtered points $P_{l-\beta}$ to $P_{l+\beta}$, all of the $2\beta+1$ to-

be-filtered points may be arranged based on magnitudes of first coordinate values, where the first coordinate may refer to the foregoing longitude value or X-axis coordinate, to-be-filtered points that correspond to maximum and minimum values are removed, and only k to-be-filtered points that correspond to intermediate values are taken; and similarly, all the to-be-filtered points are further arranged based on magnitudes of second coordinate values, where the second coordinate may refer to the foregoing latitude value or X-axis coordinate, to-be-filtered points that correspond to maximum and minimum values are removed, and only h to-be-filtered points that correspond to intermediate values are taken.

Optionally, the at least two coordinate values of each of the $2\beta+1$ to-be-filtered points $P_{l-\beta}$ to $P_{l+\beta}$ may be respectively a longitude coordinate and a latitude coordinate. Specifically, in the $2\beta+1$ to-be-filtered points $P_{l-\beta}$ to $P_{l+\beta}$, an average value of longitudes of all k to-be-filtered points $P_m$ to $P_{m+k-1}$ and an average value of latitudes of all h to-be-filtered points $P_m$ to $P_{m+h-1}$ are determined, and the average value of the longitudes and the average value of the latitudes are respectively determined as a longitude and a latitude of the $l^{th}$ to-be-filtered point $P_l$ in the $2\beta+1$ to-be-filtered points $P_{l-\beta}$ to $P_{l+\beta}$.

Optionally, the at least two coordinate values of each of the $2\beta+1$ to-be-filtered points $P_{l-\beta}$ to $P_{l+\beta}$ may be an X-axis coordinate and a Y-axis coordinate in a rectangular coordinate system, where an origin (0,0) of the rectangular coordinate system may be set at any point, that is, the rectangular coordinate system may be established with any point as a reference. Specifically, assuming that a rectangular coordinate system is established with a location of a first track point $P_1$ in the n original track points $P_1$ to $P_n$ as an origin, a horizontal direction as an X axis, and a vertical direction as a Y axis. A corresponding X axis and a corresponding Y axis may be determined for each of the obtained $2\beta+1$ to-be-filtered points $P_{l-\beta}$ to $P_{l+\beta}$. An average value of X-axis coordinates of all k to-be-filtered points $P_m$ to $P_{m+k-1}$ and an average value of Y-axis coordinates of all h to-be-filtered points $P_m$ to $P_{m+k-1}$ are determined, and the average value of the X-axis coordinates and the average value of the Y-axis coordinates are respectively determined as an X-axis coordinate and a Y-axis coordinate of the $l^{th}$ to-be-filtered point $P_l$ in the $2\beta+1$ to-be-filtered points $P_{l-\beta}$ to $P_{l+\beta}$.

Optionally, at least two coordinate values of each of the $2\beta+1$ to-be-filtered points $P_{l-\beta}$ to $P_{l+\beta}$ may further be coordinate values in another coordinate system, and details are not described herein again.

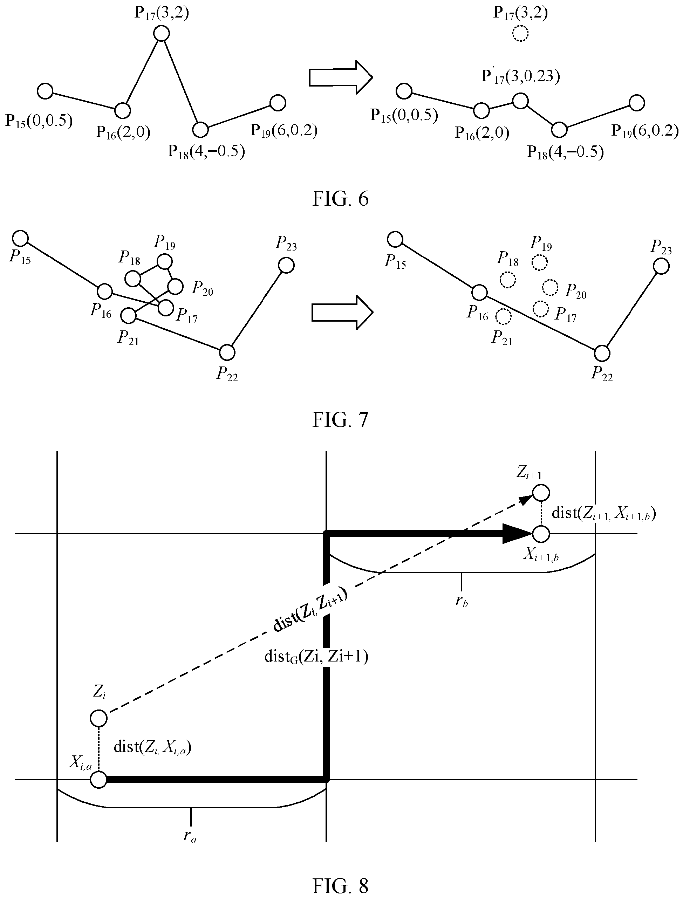

A coordinate value of a rectangular coordinate system is used as an example for description below. For example, FIG. 6 is a schematic diagram of trimmed mean filtering according to an embodiment of this application. As shown in FIG. 6, $2\beta+1$ to-be-filtered points $P_{l-\beta}$ to $P_{l+\beta}$ that are obtained by a server are respectively $P_{15}$ to $P_{19}$, that is, $\beta=2$ and $l=17$, and the coordinate value of each to-be-filtered point is shown in FIG. 6. It is assumed that the rectangular coordinate system uses a location of $P_{14}$ as an origin, a horizontal direction as an X axis, and a vertical direction as a Y axis. For the X-axis coordinate, X-axis coordinates of the five to-be-filtered points are sequentially arranged as (0,2,3,4,6) by size, a trimmed value is set to 1, that is, k=3, one maximum value and one minimum value are removed, and the remaining three coordinates are (2,3,4). Similarly, for the Y-axis coordinate, Y-axis coordinates of the five to-be-filtered points are sequentially arranged as (-0.5,0,0.2,0.5,2) by size, the trimmed value herein can also be set to 1, that is, h=3, one maximum value and one minimum value are removed, and the remaining three coordinates are (0,0.2,0.5). Therefore, an X-axis average value $X_{new}$ and a Y-axis average value $Y_{new}$ are calculated to be:

$$X_{new} = \frac{2+3+4}{3} = 3,$$

$$Y_{new} = \frac{0+0.2+0.5}{3} = 0.23$$

.

Therefore, $X_{new}$ and $Y_{new}$ serve as new X-axis and Y-axis coordinate values of $P_{17}$: (3,0.23), that is, $P_{17}'$ shown in FIG. 6 is an updated location.

It should be understood that, the trimmed mean filtering may be performed on each of the n original track points $P_1$ to $P_n$, or may be performed on some track points. For example, the trimmed mean filtering is only performed on some points of which coordinate value changes are relatively large. Optionally, a difference threshold may be set. When a variation of a coordinate value is less than the difference threshold, it is determined that the coordinate value change is relatively small, and the trimmed mean filtering is not performed, but the embodiments of this application are not limited thereto.

Using the foregoing embodiment as an example, because coordinates of the original track point $P_{17}$ are (3,2) and after trimmed mean processing, the coordinates change to $P_{17}' = (3, 0.23)$. It is assumed that the difference threshold is set to 0.5. Because a variation of the X-axis coordinate value is 0, a change of the Y-axis coordinate value is used as an example herein. Based on the Y-axis coordinate value 0.23 that is obtained by performing a calculation method of the trimmed mean filtering on $P_{17}$, it can be learned that the variation is 3-0.23=2.77, and 2.77>0.5. It can be determined to perform the trimmed mean filtering and update the coordinate value of $P_{17}$ to $P_{17}'=(3,0.23)$. Assuming the Y-axis coordinate obtained through calculation herein is 1.9 instead of 0.23, because a difference between 1.9 and the original coordinate value 2 is 0.1, and 0.1 is less than 0.5, the original coordinate value of $P_{17}$ can still be used by skipping performing trimmed mean filtering on the track point $P_{17}$.

It should be understood that, for at least two coordinate values of any to-be-filtered point $P_l$, it can be determined to update some or all of coordinate values, and this embodiment of this application is not limited thereto.

Therefore, in the trimmed mean filtering, coordinates of a current point may be adjusted with reference to locations of several points before and after the point, so that the shape of the track is smoother, and subsequent map matching is helped.

Optionally, in an embodiment, filtering is performed on the n original track points $P_1$ to $P_n$, and the filtering may be near-point filtering. Specifically, the server obtains the $y^{th}$ to-be-filtered point $P_y$ and the $(y+1)^{th}$ to-be-filtered point $P_{y+1}$ in the n original track points $P_1$ to $P_n$; and deletes the $y^{th}$ to-be-filtered point $P_y$ and/or the $(y+1)^{th}$ to-be-filtered point $P_{y+1}$ if a distance between the $y^{th}$ to-be-filtered point $P_y$ and the $(y+1)^{th}$ to-be-filtered point $P_{y+1}$ is less than or equal to a preset distance; otherwise, reserves the two to-be-filtered points $P_y$ and $P_{y+1}$.

Optionally, the server may also obtain the $(y-1)^{th}$ to-be-filtered point $P_{y-1}$, the $y^{th}$ to-be-filtered point $P_y$, and the $(y+1)^{th}$ to-be-filtered point $P_{y+1}$ in the n original track points $P_1$ to $P_n$; and delete the $y^{th}$ to-be-filtered point $P_y$; otherwise, reserve the to-be-filtered point $P_y$ if a distance between the $(y-1)^{th}$ to-be-filtered point $P_{y-1}$ and the $y^{th}$ to-be-filtered point $P_y$ is less than or equal to a preset distance, and a distance between the $y^{th}$ to-be-filtered point $P_y$ and the $(y+1)^{th}$ to-be-filtered point $P_{y+1}$ is also less than or equal to the preset distance.

It should be understood that, the preset distance can be set based on an actual situation. For example, the preset distance can be set based on a moving speed of the mobile terminal and a sampling time, or the preset distance can be set based on an average value of a distance between every two adjacent points in the n original track points $P_1$ to $P_n$, and this embodiment of this application is not limited thereto.

For example, FIG. 7 is a schematic diagram of near-point filtering according to an embodiment of this application. As shown in FIG. 7, each of n original track points $P_1$ to $P_n$ may be used as the $y^{th}$ to-be-filtered point $P_y$ sequentially, where the to-be-filtered points $P_{15}$ and $P_{23}$ are used as an example for description herein. A distance between every two adjacent to-be-filtered points in $P_{15}$ to $P_{23}$ is calculated separately, and it is assumed that only distances of $P_{16}P_{17}$, $P_{17}P_{18}$, $P_{18}P_{19}$, $P_{19}P_{20}$, and $P_{20}P_{21}$ are less than or equal to the preset distance. Using $P_{16}P_{17}$ as an example, both points $P_{16}$ and $P_{17}$ can be deleted, and similarly, $P_{16}$ to $P_{21}$ need to be deleted; or $P_{16}$ or $P_{17}$ may be deleted, if $P_{16}$ is deleted, $P_{16}$ to $P_{20}$ are deleted correspondingly, and if $P_{17}$ is deleted, $P_{17}$ to $P_{21}$ are deleted correspondingly, that is, as shown in FIG. 7, remaining points are $P_{15}$, $P_{16}$, $P_{22}$, and $P_{23}$; or adjacent to-be-filtered points whose distance is less than or equal to the preset distance in points $P_{16}$ and $P_{21}$ are deleted, that is, $P_{17}$ to $P_{20}$ are deleted.

Therefore, the near-point filtering can eliminate a positioning error caused by an excessively slow moving speed or a static status of the mobile terminal and an impact on map matching, to resolve an anchor point drift problem caused by a stay of the mobile terminal. For example, the mobile terminal may be a vehicle, the vehicle may stop or slow down during traveling, and the near-point filtering can eliminate a positioning error caused by a stopping or slowing-down process of the vehicle.

It should be understood that, the filtering in S120 may include at least one of the difference filtering, the speed filtering, the angle filtering, the distortion degree filtering, the trimmed mean filtering, and the near-point filtering. Therefore, when the filtering process includes at least two filtering procedures, n original track points $P_1$ to $P_n$ in any non-first filtering may be obtained by renumbering remaining track points after previous filtering.

For example, using seven original track points $P_1$ to $P_7$ as an example, assuming that points $P_3$ and $P_5$ are deleted after processing is performed once, and P6 is updated to $P_6'$, $P_1, P_2, P_4, P_6'$, and $P_7$ remain and are renumbered to obtain $P_1$, $P_2$, $P_3$ (original $P_4$), $P_4$ (original $P_6'$), and $P_5$ (original $P_7$), that is, serve as original track points when processing is performed next time. In other words, n original track points in the next time change to five track points $P_1$ to $P_5$.

It should be understood that, with consideration of calculation complexity and accuracy, at least one filtering manner of the difference filtering, the speed filtering, the angle filtering, the distortion degree filtering, the trimmed mean filtering, and the near-point filtering may be randomly chosen. For example, because procedures of the angle filtering and the distortion degree filtering are similar, choosing to perform only one of them is acceptable. For another example, because the difference filtering is relatively complex and a probability that original track points completely overlap is relatively small, choosing not to perform the difference filtering is acceptable. For another example, with consideration of a calculation effect, if it is determined to perform the difference filtering, the difference filtering may be set to be first filtering, and then, other filtering is performed.

Optionally, with consideration of a final calculation effect, the speed filtering, the angle filtering, the trimmed mean filtering, and the near-point filtering can be performed sequentially. Alternatively, the difference filtering, the speed filtering, the distortion degree filtering, the trimmed mean filtering, and the near-point filtering may be performed sequentially.

As shown in FIG. 1, the method 100 further includes: S130: Determine a moving track of the mobile terminal on at least one road in a road map based on target track points obtained by performing the filtering on the n original track points $P_1$ to $P_n$, where the road map includes a plurality of roads.

In the embodiments of this application, a server obtains the road map, and the road map includes a plurality of roads. Specifically, the road map in this embodiment of this application may use original data of various existing maps, for example, the largest open source map project OpenStreetMap, OSM for short, in the world. An original map file downloaded from the OSM official website is in an XML format; or another map format may also be used, and this embodiment of this application is not limited thereto.

In this embodiment of this application, the road map may include a plurality of roads, and the roads can be divided into several classifications, and for example, may include: a motorway (motorway), a trunk (trunk), a residential route (residential), and some unclassified roads (unclassified). If the mobile terminal is a vehicle, the plurality of roads may be divided into passable or impassable roads based on whether the vehicle can pass. For example, an ordinary vehicle cannot pass a residential-grade road.

It should be understood that, for ease of matching the moving track of the mobile terminal with the road map, the road in the original map can be segmented to obtain a road map including a plurality of roads. For example, segmentation is performed based on a direct cross point between roads, so that each road in the obtained road map is a shortest road. That is, each road is allowed to include only two nodes, namely, a start and an end, without including any branch therebetween. Optionally, each road may be bidirectional, or may be unidirectional, and this embodiment of this application is not limited thereto.

Optionally, using an original map file in the XML format downloaded from the OSM official website as an example, road segmentation is performed to obtain a road map. In the original map, a point in the map may be identified by using a node, the point may be any point in the map, and each point may have corresponding latitude and longitude information; and a broken line in the original map may further be identified by using a way, a k value may be set for each way, and when the k value is "highway", it indicates that the way corresponds and identifies one road.

It should be understood that, based on road grades in the map, the road grades may be classified as motorway, trunk, primary, secondary, tertiary, unclassified, residential, and service in descending order. Because the last two grades (residential and service) are impassable to a vehicle, and it is assumed that the mobile terminal being the vehicle is used as an example herein, when the original map is constructed and segmented to obtain the road map, roads at the two grades may be ignored. Therefore, only a road indicating that a vehicle can pass is reserved herein, that is, the way identifies a road that a vehicle can pass in the map.

It should be understood that, the node may be used to identify any point in the original map. To obtain the road map, only a node on a road is reserved herein. In other words, a node that is on a road and that is identified by using the node in the original map is reserved. To be specific, only when two or more ways both or all pass a same node, the node is reserved and serves a node in a road network, while other nodes are only used to describe a shape of a road segment, and can be ignored herein.

In this embodiment of this application, each way needs to be segmented, and when a node thereof is passed by a plurality of ways, the current way needs to be segmented by the node into two road segments. In this way, segmentation is continuously performed until it is ensured that only two points, namely, a start and an end, of one road segment are passed by a plurality of ways. Specifically, a segmented road map can be obtained by using an algorithm 1 below. The algorithm 1 describes a procedure of a road map construction algorithm, where N and W respectively represent the node and the way read from the OSM; and V is a vertex set of the road map obtained after segmentation, and E is an edge set of the road map that is obtained after segmentation; and E' is a temporary edge set and is used to record a set of road segments into which a current w is segmented. A behavior of a split(E, n) function refers to checking every edge in the edge set E, to determine whether there is a road e passing n. If there is e passing n, e is segmented, based on n, into edges $e_1$ and $e_2$.

---

**Algorithm 1** Road network construction algorithm

---

**Input:** OSM source file

**Output:** edge set $E$, vertex set $V$

---

1:   $N \leftarrow$ load_nodes(OSM)

2:   $W \leftarrow$ load_ways(OSM)

---

3:   $V = \emptyset, E = \emptyset$

4:   **For** $n$ **in** $N$

5:       $n.visited \leftarrow$ FALSE

6:   **For** $w$ **in** $W$

7:       $E' \leftarrow w$

8:       **For** $n$ **in** $w.nd$

9:           **If** $n.visited ==$ TRUE

10:              $E' \leftarrow$ split($E'$, $n$)

11:              **If** $n \notin V$

12:                  $V$.add($n$)

13:                  $E \leftarrow$ split($E$, $n$)

14:          **Else**

15:              $n.visited \leftarrow$ TRUE

16:      **If** $w$ is a bidirectional road

17:          $E$.add($E'$+ reverse($E'$))

18:      **Else**

19:          $E$.add($E'$)

20:   **Return** $V, E$;

---

It should be understood that, the server obtains the road map that includes a plurality of roads, and matches each of target track points obtained by performing the foregoing filtering with the roads in the road map, to obtain at least one corresponding road. Specifically, m target track points are obtained by performing filtering on n original track points $P_1$ to $P_n$, where m is less than and equal to n. Road matching is performed between the m target track points and the road map to obtain m roads, where there may be a same road in the m roads.

Optionally, the m target track points may be, for example, matched with the roads through a plurality of algorithms, for example, with consideration of accuracy and robustness, the road matching can be performed based on a hidden Markov model (Hidden Markov Model, HMM), and map matching of the HMM is provided with the best accuracy and robustness. Specifically, the HMM is one of Markov chains, and the state thereof cannot be observed directly, but can be observed through an observation sequence. It is assumed that nodes $O_1$, $O_2$, ..., $O_n$ are an observed sequence. The HMM assumes that each observed sequence is generated by a corresponding hidden state, and correspondingly, $H_1$, $H_2$, ..., $H_n$ are a hidden state sequence. Each hidden state is related to a previous hidden state, but is not related to a more previous hidden state. The HMM map matching algorithm uses a real road segment corresponding to each observation point as a hidden state, the mobile terminal is regarded to transition between hidden states (that is, transition between the road segments), and each hidden state generates an observed state (that is, an actually obtained location of a target track point). A path (namely, a road segment sequence) after track matching is obtained by obtaining a hidden state sequence having a largest probability in a given observation state.

Specifically, for a matching procedure of the road map, two probabilities need to be modeled. The first is a radiation probability (also referred to as a measurement probability), indicating a probability that one road segment matches the state from the perspective of spatial measurement. FIG. 8 is a schematic diagram of a road map matching method according to an embodiment of this application. As shown in FIG. 8, for m target track points $Z_1$ to $Z_m$ obtained after filtering, any track point $Z_i$ is selected, a radiation probability of a candidate road $r_a$ is marked as $P(Z_i|r_a)$, and the probability describes likelihood of the target track point $Z_i$ on the road $r_a$. Intuitively, a farther distance between the candidate road segment and a sampling point indicates a smaller possibility of actually moving on the road segment and a smaller radiation probability. Assuming that a positioning data error follows Gaussian distribution, then:

$$P(Z_i \mid r_a) = \frac{1}{\sqrt{2\pi}\sigma} e^{-\frac{dist(Z_a, X_{i,a})^2}{2\sigma}}$$

where, as shown in FIG. 8, $X_{i,a}$ is a projection point of $Z_i$ on $r_a$.

The second one that needs to be modeled is a transition probability. Any target track point $Z_i$ has a series of candidate matching road segments, for example, roads $r_a$, $r_b$ .... The transition probability refers to a probability of transitioning from a current state to a next state. Intuitively, an actual driving path is usually close to a shortest path as much as possible. Therefore, a larger difference between a distance on the road and the shortest distance indicates a lower transition probability.

A candidate matching road of any target track point $Z_i$ is the road segment $r_a$. A candidate matching road of a next target track point $Z_{i+1}$ of the target track point $Z_i$ is the road segment $r_b$. $X_{i+1,b}$ is marked as a projection point of the target track point $Z_{i+1}$ on the road segment $r_b$, and then a probability of transitioning from $r_a$ that matches $Z_i$ to $r_b$ matches $Z_{i+1}$ is:

$$P(r_b \mid r_a, Z_i, Z_{i+1}) = \frac{1}{\beta} e^{-\delta_i/\beta}$$

where $\delta_i = |dist(Z_i, Z_{i+1}) - dist_G(X_{i,a}, X_{i+1,b})|$; $dist(Z_i, Z_{i+1})$ is an actual distance between the target track point $Z_i$ and $Z_{i+1}$; and $dist_G(X_{i,a}, X_{i+1,b})$ is a distance between $X_{i,a}$ and $X_{i+1,b}$ on the road, that is, a length of a gray broken line from $X_{i,a}$ to $X_{i+1,b}$ in FIG. 8.

For a to-be-matched track, that is, m target track points $Z = Z_1 \to Z_2 \to ... \to Z_m$, m corresponding road segments $R^* = r_1, r_2, ..., r_m$ that are found through matching should satisfy:

$$R^* = \arg\max_R P(R|Z)$$

P(R|Z) is expanded, and a first-order Markov property of the Markov chain is used, including:

$$P(R|Z) \propto P(Z|R)P(R)$$
$$= P(Z_1, Z_2, ..., Z_m \mid r_1, r_2, ..., r_m)P(r_1, r_2, ..., r_m)$$
$$= \prod P(Z_i \mid r_i)\prod P(r_j \mid r_i)$$

$P(z_i|r_i)$ is a radiate probability and $P(r_j|r_i)$ is a transition probability. A state sequence R can be obtained by using the Viterbi algorithm, so that a posterior probability of the entire sequence is the largest, and the sequence R corresponds to m roads that correspond to m target track points.

In this embodiment of this application, m roads are obtained based on the m target track points; and a moving track of the mobile terminal on the road map is determined based on the m roads. Specifically, for the obtained m roads, the moving track of the mobile terminal on the road map may be determined by using a plurality of algorithms. For example, the moving track may be determined by using the following method. Using adjacent target track points $Z_i$ and $Z_{i+1}$ as an example herein, an actual traveling path of the mobile terminal corresponding to the target track points $Z_i$ and $Z_{i+1}$ is determined, where a matched road of $Z_i$ is marked as n, and a matched road of $Z_{i+1}$ is marked as $r_{i+1}$; and an

actual road path, determined by the server, along which the mobile terminal moves from $Z_i$ to $Z_{i+1}$ is marked as $R_i$.

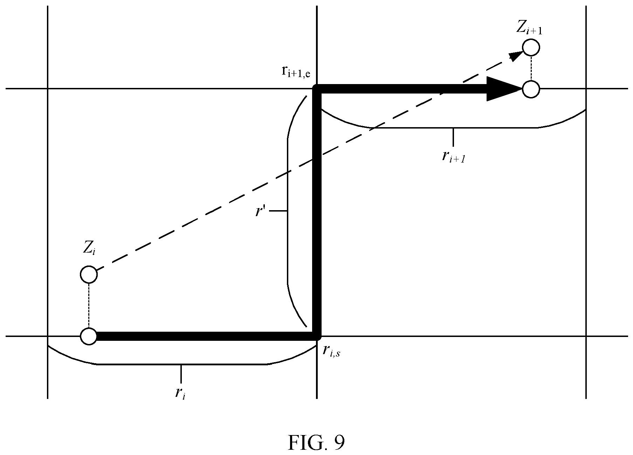

Specifically, if $r_i=r_{i+1}$, that is, the road $r_i$ and the road $r_{i+1}$ are a same road, $R_i=\{r_i\}$, in other words, the mobile terminal always moves on the road n. If $r_i \neq r_{i+1}$, and $r_i$ is adjacent to $r_{i+1}$, that is, the road $r_i$ and the road $r_{i+1}$ are not a same road, but when the road $r_i$ is connected to the road $r_{i+1}$ end to end, $R_i=\{r_i, r_{i+1}\}$, in other words, the moving track of the mobile terminal is from the road $r_i$ to the road $r_{i+1}$. If $r_i \neq r_{i+1}$, and $r_i$ is not adjacent to $r_{i+1}$, that is, the road $r_i$ and the road $r_{i+1}$ are not the same road, and the road $r_i$ is not connected to the road $r_{i+1}$, an end of the road $r_i$ is determined and marked as $r_{i,s}$, and a start of the road $r_{i+1}$ is determined and marked as $r_{i+1,e}$. Based on $r_{i,s}$ and $r_{i+1,e}$, a shortest road path from $r_{i,s}$ to $r_{i+1,e}$ is determined and marked as r', $R_i=\{r_i\}+r'+\{r_{i+1}\}$. For example, as shown in FIG. 9, based on locations of $r_{i,s}$ and $r_{i+1,e}$, the shortest road path from $r_{i,s}$ to $r_{i+1,e}$ is r' shown in the figure. Therefore, the moving track of the mobile terminal is from the road $r_i$ to the shortest road path r', and then to the road $r_{i+1}$, for example, the path shown by the gray line segment in FIG. 9.

By analogy, the m roads corresponding to the m target track points are matched based on the foregoing manner, to obtain at least one consecutive road, that is, the moving track of the mobile terminal on the road map.

Therefore, by using the method for determining a moving track in the embodiments of this application, at least one type of filtering is performed on the n original track points during the moving process of the mobile terminal, to obtain m target points; and road map matching is further performed on the m target track points, to obtain the moving track of the mobile terminal, so that a track point that has a relatively large error and that produces a negative effect in the original track points can be filtered out or changed, thereby allowing the processed target track points to be more accurate during the map matching. In particular, for a high-noise data obtaining manner, such as base station positioning, and a special situation such as quick positioning, the subsequent map matching procedure is more accurate and the obtained moving track is closer to an actual situation.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

In addition, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

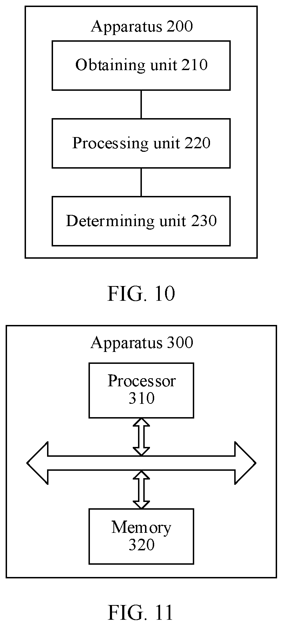

The method for determining a moving track according to this embodiment of this application is described above in detail with reference to FIG. 1 to FIG. 9. An apparatus for determining a moving track according to this embodiment of this application are described below with reference to FIG. 10 to FIG. 11.

As shown in FIG. 10, an apparatus 200 for determining a moving track according to this embodiment of this application includes an obtaining unit 210, a processing unit 220, and a determining unit 230.

The obtaining unit 210 is configured to obtain locations of n original track points $P_1$ to $P_n$ during a moving process of a mobile terminal, where a time point at which the mobile terminal passes the $i^{th}$ original track point $P_i$ in the n original track points $P_1$ to $P_n$ is earlier than a time point at which the mobile terminal passes the $(i+1)^{th}$ original track point $P_{i+1}$, and n is a positive integer.

The processing unit 220 is configured to perform filtering on the n original track points $P_1$ to $P_n$, where the filtering is used to delete at least one of the n original track points $P_1$ to $P_n$, and/or update a location of at least one of the n original track points $P_1$ to $P_n$.

The determining unit 230 is configured to determine a moving track of the mobile terminal on at least one road in a road map based on target track points obtained by performing the filtering on the n original track points $P_1$ to $P_n$, where the road map includes a plurality of roads.

Therefore, by using the apparatus for determining a moving track in the embodiments of this application, at least one type of filtering is performed on the n original track points during the moving process of the mobile terminal, to obtain m target points; and road map matching is further performed on the m target track points, to obtain the moving track of the mobile terminal, so that a track point that has a relatively large error and that produces a negative effect in the original track points can be filtered out or changed, thereby allowing the processed target track points to be more accurate during the map matching. In particular, for a high-noise data obtaining manner, such as base station positioning, and a special situation such as quick positioning, the subsequent map matching procedure is more accurate and the obtained moving track is closer to an actual situation.

Optionally, the processing unit 220 is specifically configured to: obtain a to-be-filtered points $P_x$ to $P_{x+a-1}$ in the n original track points $P_1$ to $P_n$, where the a to-be-filtered points $P_x$ to $P_{x+a-1}$ are located at a first location, x and a are positive integers; obtain b to-be-filtered points $P_{x+a}$ to $P_{x+a+b-1}$ in the n original track points $P_1$ to $P_n$, where the b to-be-filtered points $P_{x+a}$ to $P_{x+a+b-1}$ are located at a second location, b is a positive integer greater than 1; obtain c to-be-filtered points $P_{x+a+b}$ to $P_{x+a+b+c-1}$ in the n original track points $P_1$ to $P_n$, where the c to-be-filtered points $P_{x+a+b}$ to $P_{x+a+b+c-1}$ are located at a third location, c is a positive integer, and x+a+b+c-1 is less than or equal to n; evenly arrange to-be-filtered points $P_{x+\lfloor a/2 \rfloor}$ to $P_{x+a+\lfloor b/2 \rfloor}$ on a straight line from the first location to the second location; and evenly arrange to-be-filtered points $P_{x+a+\lfloor b/2 \rfloor}$ to $P_{x+a+b+\lfloor c/2 \rfloor}$ on a straight line from the second location to the third location, where $\lfloor \ \rfloor$ indicates rounding down.

Optionally, the processing unit 220 is specifically configured to: obtain a speed at a first to-be-filtered point $P_a$ in the n original track points $P_1$ to $P_n$, where a is a positive integer less than or equal to n; and delete the first to-be-filtered point $P_a$ if the speed at the first to-be-filtered point $P_a$ is greater than or equal to a preset speed.

Optionally, the processing unit 220 is specifically configured to: obtain the first to-be-filtered point $P_a$ and a second to-be-filtered point $P_b$ in the n original track points $P_1$ to $P_n$, where b=a+1 or b=a-1, and a is less than n; and determine that an average speed in a distance from the first to-be-filtered point $P_a$ to the second to-be-filtered point $P_b$ is the speed at the first to-be-filtered point $P_a$.

Optionally, the processing unit 220 is specifically configured to: obtain four to-be-filtered points $P_c$, $P_{c+1}$, $P_{c+2}$, and $P_{c+3}$ in the n original track points $P_1$ to $P_n$, where c is a positive integer, and c+3 is less than or equal to n; determine a first angle $\angle P_c P_{c+1} P_{c+2}$ and a second angle $\angle P_{c+1} P_{c+2} P_{c+3}$; and delete the to-be-filtered point $P_{c+1}$ or the to-be-filtered point $P_{c+2}$ in the four to-be-filtered points $P_c$, $P_{c+1}$, $P_{c+2}$, and $P_{c+3}$ if the first angle is less than or equal to a first preset angle and the second angle is less than or equal to a second preset angle.

Optionally, the processing unit 220 is specifically configured to: obtain $2\alpha+1$ to-be-filtered points $P_{f-\alpha}$ to $P_{f+\alpha}$ in the n original track points $P_1$ to $P_n$, where f and $\alpha$ are positive integers, and f is greater than $\alpha$; determine a distance between a to-be-filtered point $P_g$ and an adjacent to-be-filtered point $P_{g+1}$ that are in the $2\alpha+1$ to-be-filtered points $P_{f-\alpha}$ to $P_{f+\alpha}$, where g is set to range from f-$\alpha$ to f+$\alpha$-1, to obtain $2\alpha$ distances; determine that a distance between the first to-be-filtered point $P_{f-\alpha}$ and the last to-be-filtered point $P_{f+\alpha}$ that are in the $2\alpha+1$ to-be-filtered points $P_{f-\alpha}$ to $P_{f+\alpha}$ is a first distance; determine that a quotient of a sum of the $2\alpha$ distances and the first distance is a distortion degree; and delete the $(\alpha+1)^{th}$ to-be-filtered point $P_f$ in the $2\alpha+1$ to-be-filtered points $P_{f-\alpha}$ to $P_{f+\alpha}$ when the distortion degree is greater than or equal to a preset distortion degree.

Optionally, the processing unit 220 is specifically configured to: obtain $2\beta+1$ to-be-filtered points $P_{l-\beta}$ to $P_{l+\beta}$ in the n original track points $P_1$ to $P_n$, where l and $\beta$ are positive integers and l is greater than $\beta$; determine, in the $2\beta+1$ to-be-filtered points $P_{l-\beta}$ to $P_{l+\beta}$, an average value of longitudes of all k to-be-filtered points and an average value of latitudes of all h to-be-filtered points, where k and h are positive integers less than $2\beta+1$; and respectively determine the average value of the longitudes and the average value of the latitudes as a longitude and a latitude of the $(\beta+1)^{th}$ to-be-filtered point $P_l$ in the $2\beta+1$ to-be-filtered points $P_{l-\beta}$ to $P_{l+\beta}$.

Optionally, the processing unit 220 is specifically configured to: obtain the $y^{th}$ to-be-filtered point $P_y$ and the $(y+1)^{th}$ to-be-filtered point $P_{y+1}$ in the n original track points $P_1$ to $P_n$; and delete the $y^{th}$ to-be-filtered point $P_y$ and/or the $(y+1)^{th}$ to-be-filtered point $P_{y+1}$ if a distance between the $y^{th}$ to-be-filtered point $P_y$ and the $(y+1)^{th}$ to-be-filtered point $P_{y+1}$ is less than or equal to a preset distance.

It should be understood that, the apparatus 200 for determining a moving track according to this embodiment of this application may correspond to performing the method 100 in the embodiments of this application, and in the apparatus 200, the foregoing and other operations and/or functions of units are respectively performed for corresponding procedures of the server in each method in FIG. 1 to FIG. 9. For brevity, details are not described herein again.

Therefore, by using the apparatus for determining a moving track in the embodiments of this application, at least one type of filtering is performed on the n original track points during the moving process of the mobile terminal, to obtain m target points; and road map matching is further performed on the m target track points, to obtain the moving track of the mobile terminal, so that a track point that has a relatively large error and that produces a negative effect in the original track points can be filtered out or changed, thereby allowing the processed target track points to be more accurate during the map matching. In particular, for a high-noise data obtaining manner, such as base station positioning, and a special situation such as quick positioning, the subsequent map matching procedure is more accurate and the obtained moving track is closer to an actual situation.

FIG. 11 is a schematic block diagram of an apparatus 300 for determining a moving track according to an embodiment of this application. As shown in FIG. 11, the apparatus 300 includes a processor 310. Optionally, the apparatus 300 further includes a memory 320, and the memory 320 is connected to the processor 310. The processor 310 and the memory 320 may communicate with each other through an inner connection path, to transfer and/or control a data signal. The memory 320 may be configured to store an instruction, the processor 310 is configured to perform the instruction stored in the memory 320, and the processor 310 is further configured to: obtain locations of n original track points $P_1$ to $P_n$ during a moving process of a mobile terminal, where a time point at which the mobile terminal passes the $i^{th}$ original track point $P_i$ in the n original track points $P_1$ to $P_n$ is earlier than a time point at which the mobile terminal passes the $(i+1)^{th}$ original track point $P_{i+1}$, and n is a positive integer; perform filtering on the n original track points $P_1$ to $P_n$, where the filtering is used to delete at least one of the n original track points $P_1$ to $P_n$, and/or update a location of at least one of the n original track points $P_1$ to $P_n$; and determine a moving track of the mobile terminal on at least one road in a road map based on target track points obtained by performing the filtering on the n original track points $P_1$ to $P_n$, where the road map includes a plurality of roads.

Therefore, by using the apparatus for determining a moving track in the embodiments of this application, at least one type of filtering is performed on the n original track points during the moving process of the mobile terminal, to obtain m target points; and road map matching is further performed on the m target track points, to obtain the moving track of the mobile terminal, so that a track point that has a relatively large error and that produces a negative effect in the original track points can be filtered out or changed, thereby allowing the processed target track points to be more accurate during the map matching. In particular, for a high-noise data obtaining manner, such as base station positioning, and a special situation such as quick positioning, the subsequent map matching procedure is more accurate and the obtained moving track is closer to an actual situation.

Optionally, in an embodiment, the processor 310 is configured to: obtain a to-be-filtered points $P_x$ to $P_{x+a-1}$ in the n original track points $P_1$ to $P_n$, where the a to-be-filtered points $P_x$ to $P_{x+a-1}$ are located at a first location, and x and a are positive integers; obtain b to-be-filtered points $P_{x+a}$ to $P_{x+a+b-1}$ in the n original track points $P_1$ to $P_n$, where the b to-be-filtered points $P_{x+a}$ to $P_{x+a+b-1}$ are located at a second location, and b is a positive integer greater than 1; obtain c to-be-filtered points $P_{x+a+b}$ to $P_{x+a+b+c-1}$ in the n original track points $P_1$ to $P_n$, where the c to-be-filtered points $P_{x+a+b}$ to $P_{x+a+b+c-1}$ are located at a third location, c is a positive integer, and x+a+b+c-1 is less than or equal to n; evenly arrange to-be-filtered points $P_{x+\lfloor a/2 \rfloor}$ to $P_{x+a+\lfloor b/2 \rfloor}$ on a straight line from the first location to the second location; and evenly arrange to-be-filtered points $P_{x+a+\lfloor b/2 \rfloor}$ to $P_{x+a+b+\lfloor c/2 \rfloor}$ on a straight line from the second location to the third location, where $\lfloor \ \rfloor$ indicates rounding down.

Optionally, in an embodiment, the processor 310 is configured to: obtain a speed at a first to-be-filtered point $P_a$ in the n original track points $P_1$ to $P_n$, where a is a positive integer less than or equal to n; and delete the first to-be-filtered point $P_a$ if the speed at the first to-be-filtered point $P_a$ is greater than or equal to a preset speed.

Optionally, in an embodiment, the processor 310 is configured to: obtain the first to-be-filtered point $P_a$ and a second to-be-filtered point $P_b$ in the n original track points $P_1$ to $P_n$, where b=a+1 or b=a-1, and a is less than n; and determine that an average speed in a distance from the first to-be-filtered point $P_a$ to the second to-be-filtered point $P_b$ is the speed at the first to-be-filtered point $P_a$.

Optionally, in an embodiment, the processor 310 is configured to: obtain four to-be-filtered points $P_c$, $P_{c+1}$, $P_{c+2}$, and $P_{c+3}$ in the n original track points $P_1$ to $P_n$, where c is a positive integer, and c+3 is less than or equal to n; determine a first angle $\angle P_c P_{c+1} P_{c+2}$ and a second angle $\angle P_{c+1} P_{c+2} P_{c+3}$; and delete the to-be-filtered point $P_{c+1}$ or the to-be-filtered point $P_{c+2}$ in the four to-be-filtered points $P_c$, $P_{c+1}$, $P_{c+2}$, and $P_{c+3}$ if the first angle is less than or equal to a first preset angle and the second angle is less than or equal to a second preset angle.

Optionally, in an embodiment, the processor 310 is configured to: obtain $2\alpha+1$ to-be-filtered points $P_{f-\alpha}$ to $P_{f+\alpha}$ in the n original track points $P_1$ to $P_n$, where f and a are positive integers, and f is greater than a; determine a distance between a to-be-filtered point $P_g$ and an adjacent to-be-filtered point $P_{g+1}$ that are in the $2\alpha+1$ to-be-filtered points $P_{f-\alpha}$ to $P_{f+\alpha}$, where g is set to range from f-α to f+α-1, to obtain 2a distances; determine that a distance between the first to-be-filtered point $P_{f-\alpha}$ and the last to-be-filtered point $P_{f+\alpha}$ that are in the $2\alpha+1$ to-be-filtered points $P_{f-\alpha}$ to $P_{f+\alpha}$ is a first distance; determine that a quotient of a sum of the 2a distances and the first distance is a distortion degree; and delete the $(\alpha+1)^{th}$ to-be-filtered point $P_f$ in the $2\alpha+1$ to-be-filtered points $P_{f-\alpha}$ to $P_{f+\alpha}$ when the distortion degree is greater than or equal to a preset distortion degree.

Optionally, in an embodiment, the processor 310 is configured to: obtain $2\beta+1$ to-be-filtered points $P_{l-\beta}$ to $P_{l+\beta}$ in the n original track points $P_1$ to $P_n$, where l and β are positive integers, and l is greater than β; determine, in the $2\beta+1$ to-be-filtered points $P_{l-\beta}$ to $P_{l+\beta}$, an average value of longitudes of all k to-be-filtered points and an average value of latitudes of all h to-be-filtered points, where k and h are positive integers less than $2\beta+1$; and determine that the average value of the longitudes and the average value of the latitudes are respectively a longitude and a latitude that are of the $(\beta+1)^{th}$ to-be-filtered point $P_l$ in the $2\beta+1$ to-be-filtered points $P_{l-\beta}$ to $P_{l+\beta}$.

Optionally, in an embodiment, the processor 310 is configured to: obtain a $y^{th}$ to-be-filtered point $P_y$ and a $(y+1)^{th}$ to-be-filtered point $P_{y+1}$ in the n original track points $P_1$ to $P_n$; and delete the $y^{th}$ to-be-filtered point $P_y$ and/or the $(y+1)^{th}$ to-be-filtered point $P_{y+1}$ if a distance between the $y^{th}$ to-be-filtered point $P_y$ and the $(y+1)^{th}$ to-be-filtered point $P_{y+1}$ is less than or equal to a preset distance.

It should be understood that, the apparatus 300 for determining a moving track according to this embodiment of this application may correspond to the apparatus 200 in the embodiments of this application, and may correspond to a corresponding execution body in the method 100 according to the embodiments of this application, and the foregoing and other operations and/or functions of the units of the apparatus 300 are respectively intended to implement corresponding procedures of the server in the methods in FIG. 1 to FIG. 9. For brevity, details are not described herein again.

Therefore, by using the apparatus for determining a moving track in the embodiments of this application, at least one type of filtering is performed on the n original track points during the moving process of the mobile terminal, to obtain m target points; and road map matching is further performed on the m target track points, to obtain the moving track of the mobile terminal, so that a track point that has a relatively large error and that produces a negative effect in the original track points can be filtered out or changed, thereby allowing the processed target track points to be more accurate during the map matching. In particular, for a high-noise data obtaining manner, such as base station positioning, and a special situation such as quick positioning, the subsequent map matching procedure is more accurate and the obtained moving track is closer to an actual situation.

It should be noted that the foregoing method embodiment of this application may be applied to a processor, or implemented by a processor. The processor may be an integrated circuit chip and has a signal processing capability. In an implementation process, steps in the foregoing method embodiments can be implemented by using a hardware integrated logical circuit in the processor, or by using instructions in a form of software. The processor may be a general purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logical device, a discrete gate or transistor logic device, or a discrete hardware component. It may implement or perform the methods, the steps, and logical block diagrams that are disclosed in the embodiments of this application. The general purpose processor may be a microprocessor, or the processor may be any conventional processor or the like. Steps of the methods disclosed with reference to the embodiments of this application may be directly executed and accomplished by means of a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, a register, or the like. The storage medium is located in the memory, and a processor reads information in the memory and completes the steps in the foregoing methods in combination with hardware of the processor.

It may be understood that the memory in the embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described in this specification includes but is not limited to these and any memory of another proper type.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for determining a moving track, comprising:

   obtaining locations of n original track points $P_1$ to $P_n$ during a moving process of a mobile terminal, wherein a time point at which the mobile terminal passes the $i^{th}$ original track point $P_i$ in the n original track points $P_1$ to $P_n$ is earlier than a time point at which the mobile terminal passes the $(i+1)^{th}$ original track point $P_{i+1}$, and n is a positive integer;

   performing filtering on the n original track points $P_1$ to $P_n$, wherein the filtering is used to delete at least one of the n original track points $P_1$ to $P_n$, and/or update a location of at least one of the n original track points $P_1$ to $P_n$; and

   determining a moving track of the mobile terminal on at least one road in a road map based on target track points obtained by performing the filtering on the n original track points $P_1$ to $P_n$, wherein the road map comprises a plurality of roads.

2. The method according to claim 1, wherein the performing filtering on the n original track points $P_1$ to $P_n$ comprises:

   obtaining a to-be-filtered points $P_x$ to $P_{x+a-1}$ in the n original track points $P_1$ to $P_n$, wherein the a to-be-filtered points $P_x$ to $P_{x+a-1}$ are located at a first location, and x and a are positive integers;

   obtaining b to-be-filtered points $P_{x+a}$ to $P_{x+a+b-1}$ in the n original track points $P_1$ to $P_n$, wherein the b to-be-filtered points $P_{x+a}$ to $P_{x+a+b-1}$ are located at a second location, and b is a positive integer greater than 1;

   obtaining c to-be-filtered points $P_{x+a+b}$ to $P_{x+a+b+c-1}$ in the n original track points $P_1$ to $P_n$, wherein the c to-be-filtered points $P_{x+a+b}$ to $P_{x+a+b+c-1}$ are located at a third location, c is a positive integer, and x+a+b+c-1 is less than or equal to n;

   evenly arranging to-be-filtered points $P_{x+\lfloor a/2 \rfloor}$ to $P_{x+a+\lfloor b/2 \rfloor}$ on a straight line from the first location to the second location; and

   evenly arranging to-be-filtered points $P_{x+a+\lfloor b/2 \rfloor}$ to $P_{x+a+b+\lfloor c/2 \rfloor}$ on a straight line from the second location to the third location, wherein $\lfloor \ \rfloor$ indicates rounding down.

3. The method according to claim 1, wherein the performing filtering on the n original track points $P_1$ to $P_n$ comprises:

   obtaining a speed at a first to-be-filtered point $P_a$ in the n original track points $P_1$ to $P_n$, wherein a is a positive integer less than or equal to n; and

   deleting the first to-be-filtered point $P_a$ if the speed at the first to-be-filtered point $P_a$ is greater than or equal to a preset speed.

4. The method according to claim 3, wherein the obtaining a speed at a first to-be-filtered point $P_a$ in the n original track points $P_1$ to $P_n$ comprises:

   obtaining the first to-be-filtered point $P_a$ and a second to-be-filtered point $P_b$ in the n original track points $P_1$ to $P_n$, wherein b=a+1 or b=a-1, and a is less than n; and

   determining that an average speed in a distance from the first to-be-filtered point $P_a$ to the second to-be-filtered point $P_b$ is the speed at the first to-be-filtered point $P_a$.

5. The method according to claim 1, wherein the performing filtering on the n original track points $P_1$ to $P_n$ comprises:

   obtaining four to-be-filtered points $P_c$, $P_{c+1}$, $P_{c+2}$, and $P_{c+3}$ in the n original track points $P_1$ to $P_n$, wherein c is a positive integer, and c+3 is less than or equal to n;

determining a first angle $\angle P_c P_{c+1} P_{c+2}$ and a second angle $\angle P_{c+1} P_{c+2} P_{c+3}$; and

deleting the to-be-filtered point $P_{c+1}$ or the to-be-filtered point $P_{c+2}$ in the four to-be-filtered points $P_c$, $P_{c+1}$, $P_{c+2}$, and $P_{c+3}$ if the first angle is less than or equal to a first preset angle and the second angle is less than or equal to a second preset angle.

6. The method according to claim 1, wherein the performing filtering on the n original track points $P_1$ to $P_n$ comprises:

obtaining $2\alpha+1$ to-be-filtered points $P_{f-\alpha}$ to $P_{f+\alpha}$ in the n original track points $P_1$ to $P_n$, wherein $f$ and a are positive integers, and $f$ is greater than a;

determining a distance between a to-be-filtered point $P_g$ and an adjacent to-be-filtered point $P_{g+1}$ that are in the $2\alpha+1$ to-be-filtered points $P_{f-\alpha}$ to $P_{f+\alpha}$, wherein g is set to range from $f-\alpha$ to $f+\alpha-1$, to obtain 2a distances;

determining that a distance between the first to-be-filtered point $P_{f-\alpha}$ and the last to-be-filtered point $P_{f+\alpha}$ in the $2\alpha+1$ to-be-filtered points $P_{f-\alpha}$ to $P_{f+\alpha}$ is a first distance;

determining that a quotient of a sum of the 2a distances and the first distance is a distortion degree; and

deleting the $(\alpha+1)^{th}$ to-be-filtered point $P_f$ in the $2\alpha+1$ to-be-filtered points $P_{f-\alpha}$ to $P_{f+\alpha}$ when the distortion degree is greater than or equal to a preset distortion degree.

7. The method according to claim 1, wherein the performing filtering on the n original track points $P_1$ to $P_n$ comprises:

obtaining $2\beta+1$ to-be-filtered points $P_{l-\beta}$ to $P_{l+\beta}$ in the n original track points $P_1$ to $P_n$, wherein $l$ and $\beta$ are positive integers, and $l$ is greater than $\beta$;

determining, in the $2\beta+1$ to-be-filtered points $P_{l-\beta}$ to $P_{l+\beta}$, an average value of longitudes of all k to-be-filtered points and an average value of latitudes of all h to-be-filtered points, wherein k and h are positive integers less than $2\beta+1$; and

determining that the average value of the longitudes and the average value of the latitudes are respectively a longitude and a latitude that are of the $(\beta+1)^{th}$ to-be-filtered point $P_l$ in the $2\beta+1$ to-be-filtered points $P_{l-\beta}$ to $P_{l+\beta}$.

8. The method according to claim 1, wherein the performing filtering on the n original track points $P_1$ to $P_n$ comprises:

obtaining the $y^{th}$ to-be-filtered point $P_y$ and the $(y+1)^{th}$ to-be-filtered point $P_{y+1}$ in the n original track points $P_1$ to $P_n$; and

deleting the $y^{th}$ to-be-filtered point $P_y$ and/or the $(y+1)^{th}$ to-be-filtered point $P_{y+1}$ if a distance between the $y^{th}$ to-be-filtered point $P_y$ and the $(y+1)^{th}$ to-be-filtered point $P_{y+1}$ is less than or equal to a preset distance.

9. An apparatus for determining a moving track, comprising:

an obtaining unit, configured to obtain locations of n original track points $P_1$ to $P_n$ during a moving process of a mobile terminal, wherein a time point at which the mobile terminal passes the $i^{th}$ original track point $P_i$ in the n original track points $P_1$ to $P_n$ is earlier than a time point at which the mobile terminal passes the $(i+1)^{th}$ original track point $P_{i+1}$, and n is a positive integer;

a processing unit, configured to perform filtering on the n original track points $P_1$ to $P_n$, wherein the filtering is used to delete at least one of the n original track points $P_1$ to $P_n$, and/or update a location of at least one of the n original track points $P_1$ to $P_n$; and

a determining unit, configured to determine a moving track of the mobile terminal on at least one road in a road map based on target track points obtained by performing the filtering on the n original track points $P_1$ to $P_n$, wherein the road map comprises a plurality of roads.

10. The apparatus according to claim 9, wherein the processing unit is specifically configured to:

obtain a to-be-filtered points $P_x$ to $P_{x+a-1}$ in the n original track points $P_1$ to $P_n$, wherein the a to-be-filtered points $P_x$ to $P_{x+a-1}$ are located at a first location, and x and a are positive integers;

obtain b to-be-filtered points $P_{x+a}$ to $P_{x+a+b-1}$ in the n original track points $P_1$ to $P_n$, wherein the b to-be-filtered points $P_{x+a}$ to $P_{x+a+b-1}$ are located at a second location, and b is a positive integer greater than 1;

obtain c to-be-filtered points $P_{x+a+b}$ to $P_{x+a+b+c-1}$ in the n original track points $P_1$ to $P_n$, wherein the c to-be-filtered points $P_{x+a+b}$ to $P_{x+a+b+c-1}$ are located at a third location, c is a positive integer, and x+a+b+c-1 is less than or equal to n;

evenly arrange to-be-filtered points $P_{x+\lfloor a/2 \rfloor}$ to $P_{x+a+\lfloor b/2 \rfloor}$ on a straight line from the first location to the second location; and

evenly arrange to-be-filtered points $P_{x+a+\lfloor b/2 \rfloor}$ to $P_{x+a+b+\lfloor c/2 \rfloor}$ on a straight line from the second location to the third location, wherein $\lfloor \ \rfloor$ indicates rounding down.

11. The apparatus according to claim 9, wherein the processing unit is specifically configured to:

obtain a speed at a first to-be-filtered point $P_a$ in the n original track points $P_1$ to $P_n$, wherein a is a positive integer less than or equal to n; and
delete the first to-be-filtered point $P_a$ if the speed at the first to-be-filtered point $P_a$ is greater than or equal to a preset speed.

12. The apparatus according to claim 11, wherein the processing unit is specifically configured to:

obtain the first to-be-filtered point $P_a$ and a second to-be-filtered point $P_b$ in the n original track points $P_1$ to $P_n$, wherein b=a+1 or b=a-1, and a is less than n; and
determine that an average speed in a distance from the first to-be-filtered point $P_a$ to the second to-be-filtered point $P_b$ is the speed at the first to-be-filtered point $P_a$.

13. The apparatus according to claim 9, wherein the processing unit is specifically configured to:

obtain four to-be-filtered points $P_c$, $P_{c+1}$, $P_{c+2}$, and $P_{c+3}$ in the n original track points $P_1$ to $P_n$, wherein c is a positive integer, and c+3 is less than or equal to n;
determine a first angle $\angle P_c P_{c+1} P_{c+2}$ and a second angle $\angle P_{c+1} P_{c+2} P_{c+3}$; and
delete the to-be-filtered point $P_{c+1}$ or the to-be-filtered point $P_{c+2}$ in the four to-be-filtered points $P_c$, $P_{c+1}$, $P_{c+2}$, and $P_{c+3}$ if the first angle is less than or equal to a first preset angle and the second angle is less than or equal to a second preset angle.

14. The apparatus according to claim 9, wherein the processing unit is specifically configured to:

obtain $2\alpha+1$ to-be-filtered points $P_{f-\alpha}$ to $P_{f+\alpha}$ in the n original track points $P_1$ to $P_n$, wherein f and a are positive integers, and f is greater than a;
determine a distance between a to-be-filtered point $P_g$ and an adjacent to-be-filtered point $P_{g+1}$ that are in the $2\alpha+1$ to-be-filtered points $P_{f-\alpha}$ to $P_{f+\alpha}$, wherein g is set to range from f-α to f+α-1, to obtain 2a distances;
determine that a distance between the first to-be-filtered point $P_{f-\alpha}$ and the last to-be-filtered point $P_{f+\alpha}$ in the $2\alpha+1$ to-be-filtered points $P_{f-\alpha}$ to $P_{f+\alpha}$ is a first distance;
determine that a quotient of a sum of the 2a distances and the first distance is a distortion degree; and
delete the $(\alpha+1)^{th}$ to-be-filtered point $P_f$ in the $2\alpha+1$ to-be-filtered points $P_{f-\alpha}$ to $P_{f+\alpha}$ when the distortion degree is greater than or equal to a preset distortion degree.

15. The apparatus according to claim 9, wherein the processing unit is specifically configured to:

obtain $2\beta+1$ to-be-filtered points $P_{l-\beta}$ to $P_{l+\beta}$ in the n original track points $P_1$ to $P_n$, wherein l and β are positive integers, and l is greater than β;
determine, in the $2\beta+1$ to-be-filtered points $P_{l-\beta}$ to $P_{l+\beta}$, an average value of longitudes of all k to-be-filtered points and an average value of latitudes of all h to-be-filtered points, wherein k and h are positive integers less than $2\beta+1$; and
determine that the average value of the longitudes and the average value of the latitudes are respectively a longitude and a latitude that are of the $(\beta+1)^{th}$ to-be-filtered point $P_l$ in the $2\beta+1$ to-be-filtered points $P_{l-\beta}$ to $P_{l+\beta}$.

16. The apparatus according to claim 9, wherein the processing unit is specifically configured to:

obtain the $y^{th}$ to-be-filtered point $P_y$ and the $(y+1)^{th}$ to-be-filtered point $P_{y+1}$ in the n original track points $P_1$ to $P_n$; and
delete the $y^{th}$ to-be-filtered point $P_y$ and/or the $(y+1)^{th}$ to-be-filtered point $P_{y+1}$ if a distance between the $y^{th}$ to-be-filtered point $P_y$ and the $(y+1)^{th}$ to-be-filtered point $P_{y+1}$ is less than or equal to a preset distance.

17. A computer-readable medium, configured to store a computer program, wherein the computer program comprises an instruction that is used to perform the method according to any one of claims 1 to 8.

100

| Obtain locations of n original track points $P_1$ to $P_n$ during a moving process of a mobile terminal, where a time point at which the mobile terminal passes the $i^{th}$ original track point $P_i$ in the n original track points $P_1$ to $P_n$ is earlier than a time point at which the mobile terminal passes the $(i+1)^{th}$ original track point $P_{i+1}$, and n is a positive integer | S110 |

| Perform filtering on the n original track points $P_1$ to $P_n$, where the filtering may be used to delete at least one of the n original track points $P_1$ to $P_n$, and/or update a location of at least one of the n original track points $P_1$ to $P_n$ | S120 |

| Determine a moving track on at least one road in a road map of the mobile terminal based on target track points obtained by performing the filtering on the n original track points $P_1$ to $P_n$, where the road map includes a plurality of roads. | S130 |

FIG. 1

$P_{11}, P_{12}, P_{13}$    $P_{14}, P_{15},$    $P_{19}, P_{120}$
$P_{16}, P_{17}, P_{18}$

A          B          C

$P_{12}$  $P'_{13}$  $P'_{14}$  $P'_{15}$  $P_{16}$  $P'_{17}$  $P'_{18}$  $P'_{19}$  $P_{20}$

A    D    E    F    B    G    H    K    C

FIG. 2

FIG. 3

FIG. 4

FIG. 5

P₁₇(3,2)

P₁₅(0,0.5)
P₁₆(2,0)
P₁₈(4,−0.5)
P₁₉(6,0.2)

P₁₇(3,2)

P'₁₇(3,0.23)
P₁₅(0,0.5)
P₁₆(2,0)
P₁₈(4,−0.5)
P₁₉(6,0.2)

FIG. 6

$P_{15}$
$P_{18}$
$P_{19}$
$P_{23}$
$P_{20}$
$P_{16}$
$P_{17}$
$P_{21}$
$P_{22}$

$P_{15}$
$P_{18}$
$P_{19}$
$P_{23}$
$P_{20}$
$P_{16}$
$P_{17}$
$P_{21}$
$P_{22}$

FIG. 7

$Z_{i+1}$

$\text{dist}(Z_{i+1}, X_{i+1,b})$

$X_{i+1,b}$

$r_b$

$\text{dist}(Z_i, Z_{i+1})$

$\text{dist}_G(Zi, Zi+1)$

$Z_i$

$\text{dist}(Z_i, X_{i,a})$

$X_{i,a}$

$r_a$

FIG. 8

FIG. 9

Apparatus 200

Obtaining unit 210

Processing unit 220

Determining unit 230

FIG. 10

Apparatus 300

Processor
310

Memory
320

FIG. 11

## INTERNATIONAL SEARCH REPORT

| International application No. |
|---|
| **PCT/CN2018/094740** |

**A. CLASSIFICATION OF SUBJECT MATTER**

G01C 21/30(2006.01)i

According to International Patent Classification (IPC) or to both national classification and IPC

**B. FIELDS SEARCHED**

Minimum documentation searched (classification system followed by classification symbols)

G01C; G06F

Documentation searched other than minimum documentation to the extent that such documents are included in the fields searched

Electronic data base consulted during the international search (name of data base and, where practicable, search terms used)

WPI, EPODOC, CNPAT, CNKI: 轨迹, 基站定位, 运动轨迹, 过滤, 地图, 角度, 速度, 筛选, 噪声, 去噪, track, location, filter, map, speed, angle, noise

**C. DOCUMENTS CONSIDERED TO BE RELEVANT**

| Category* | Citation of document, with indication, where appropriate, of the relevant passages | Relevant to claim No. |
|---|---|---|
| X | CN 106650771 A (BAIDU ONLINE NETWORK TECHNOLOGY (BEIJING) CO., LTD.) 10 May 2017 (2017-05-10)<br>  description, paragraphs [0029]-[0069] | 1-17 |
| A | CN 106231671 A (NANJING ZHANGKONG NETWORK SCIENCE AND TECHNOLOGY CO., LTD.) 14 December 2016 (2016-12-14)<br>  entire document | 1-17 |
| A | CN 105890599 A (SHANGHAI QIANGUA NETWORKING TECHNOLOGY CO., LTD.) 24 August 2016 (2016-08-24)<br>  entire document | 1-17 |
| A | CN 104596507 A (CHENGDU XIAOBU CHUANGXIANG CHANGLIAN TECHNOLOGY CO., LTD.) 06 May 2015 (2015-05-06)<br>  entire document | 1-17 |
| A | CN 103037507 A (ZHEJIANG HONGCHENG COMPUTER SYSTEM CO., LTD.) 10 April 2013 (2013-04-10)<br>  entire document | 1-17 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 September 2018** | **28 September 2018** |

| Name and mailing address of the ISA/CN | Authorized officer |
|---|---|
| **State Intellectual Property Office of the P. R. China**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/094740**

| Patent document cited in search report | | | Publication date (day/month/year) | Patent family member(s) | Publication date (day/month/year) |
|---|---|---|---|---|---|
| CN | 106650771 | A | 10 May 2017 | None | |
| CN | 106231671 | A | 14 December 2016 | None | |
| CN | 105890599 | A | 24 August 2016 | None | |
| CN | 104596507 | A | 06 May 2015 | None | |
| CN | 103037507 | A | 10 April 2013 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710586941